# EUROPÄISCHE PATENTSCHRIFT

(11) **EP 2 713 463 B1**
(45) Veröffentlichungstag und Bekanntmachung des Hinweises auf die Patenterteilung: **13.06.2018**
(21) Anmeldenummer: 12186467.2
(22) Anmeldetag: 28.09.2012
(51) Int. Cl.: H02J 3/30

(54) **Energiespeichersystem**
Energy storage system
Système de stockage d'énergie

(43) Veröffentlichungstag der Anmeldung: 02.04.2014
(73) Patentinhaber: Enrichment Technology Company Ltd., 52409 Jülich (DE)
(72) Erfinder: vor dem Esche, Rainer, 52525 Heinsberg (DE); Schäfer, Christoph, 52072 Aachen (DE); Treppmann, Christoph, 52074 Aachen (DE)
(74) Vertreter: Jostarndt Patentanwalts-AG

(56) Entgegenhaltungen:
- EP-A2- 2 398 125
- WO-A1-2012/036799
- WO-A2-2009/052446
- DE-A1-102008 046 747
- DE-A1-102009 043 380
- US-A1- 2004 263 116
- US-B2- 8 008 804
- Anonymous: "Microgeneration - Wikipedia, the free encyclopedia", , 14 September 2012 (2012-09-14), pages 1-12, XP055299550, Retrieved from the Internet: URL:https://en.wikipedia.org/w/index.php?t itle=Microgeneration&oldid=512296554 [retrieved on 2016-09-02]

## Beschreibung

### Gebiet der Erfindung

Die Erfindung bezieht sich auf ein Energiespeichersystem mit ein oder mehreren lokalen Energiespeicheranlagen und auf ein Verfahren zum Betreiben eines solchen Energiespeichersystems.

### Hintergrund der Erfindung

Die Energie zum Betrieb eines Stromnetzes wird von diversen unterschiedlichen Kraftwerktypen geliefert. Hierbei sind die meisten Kraftwerke, wie beispielsweise Atomkraftwerke, Kohlekraftwerke, Gaskraftwerke, Windenergie-, Biogasanlagen oder Solarkraftwerke, lediglich Energieerzeuger zur Einspeisung von Energie in das nicht lokale Stromnetz. Nicht lokale Stromnetze sind beispielsweise Übertragungsnetze, wie beispielsweise in Deutschland durch Amprion, 50Hertz, Tennet und TransnetEnBW betrieben. Diese Übertragungsnetze sind Teil des europäischen Verbundnetzes. Die oben angeführten Kraftwerke können als reine Energieerzeuger keine überschüssige Energie im Bedarfsfall aus dem Stromnetz aufnehmen und speichern. Energiespeicher können dagegen zur Aufnahme und Abgabe von Energie an ein Stromnetz verwendet werden. Energiespeicher sind beispielsweise zentrale Energiespeicher wie Pumpspeicherwerke oder dezentrale Energiespeicher wie beispielsweise Batterien oder Schwungradspeicher. Die Pumpspeicherwerke stellen weitgehend witterungsunabhängige und damit in der Regel immer verfügbare Energiespeicher dar. Zentrale Energiespeicher sind im Allgemeinen auf eine große Kapazität ausgelegt. Zur Bereitstellung von Regelenergie für das nicht lokale Stromnetz sind sie aufgrund der verfügbaren Leistung geeignet, um im nicht lokalen Stromnetz entsprechend Wirkung entfalten zu können. Pumpspeicherkraftwerke können je nach Baugröße eine Leistung von einigen 100 MW und mehr besitzen, wobei die Generatoren allerdings meist dazu ausgelegt sind, unter Volllast Strom zu produzieren und somit die volle Leistung des Pumpspeicherwerks bei entsprechendem Wirkungsgrad zeitnah nutzen zu können. Diese Betriebsweise ist nicht dafür geeignet, die Netzqualität in einem kleinen lokalen Stromnetz mit einem im Vergleich zur Kapazität des Pumpspeicherkraftwerks eher vernachlässigbarem Strombedarf zu stabilisieren oder zu verbessern. Zentrale genutzte Batteriespeicheranlagen sind im Aufbau mit dem Ziel, einen Pilotbetrieb für netzstabilisierende (ortsungebundene) Aufgaben (Regelenergie) zu realisieren. Die bisher geplanten Anlagen erfüllen jedoch keine ortsgebundenen Aufgaben. Batteriespeicher sind jedoch aufgrund ihres Verhältnisses zwischen Leistung, Kapazität und Alterung für derartige Anwendungen mit mehreren Lastzyklen pro Tag nicht gut geeignet.

US 2004/263116 A1 offenbart ein verteiltes Energiespeichersystem für ein Energiemanagement mit dezentralen Energiespeicheranlagen, die Energie nahe am Verbraucher oder am Produktionsort für den Verbrauch speichern. Die Energiespeicheranlagen können dabei mit einer zentralen Kontrollstelle und einer zentralen Abrechnungsstelle kommunizieren, um Anweisungen zu erhalten oder an einer Strombörse zu verhandeln, ob die Knoten Energie speichern, einem Verbraucher liefern oder die Energie zurück ins Verteilungsnetz einspeisen sollen. Die Entscheidung hängt dabei vom Energiebedarf und den Energiepreisen ab.

US 8,008,804 B2 offenbart eine Methode zur Regelung der Wechselspannung in einem Wechselspannungs-Verteilungsnetz, wobei dazu ein Energiespeichersystem (FESS) an das Verteilungsnetz angeschlossen ist und ein oder mehrere Schwungradenergiespeicher umfasst. Das oder die FESS werden dabei zur Frequenzregulierung im nicht-lokalen Stromnetz mittels Energieeinspeisung oder Energieabgabe verwendet.

Dezentrale Energiespeicher sind im Allgemeinen optimiert für die Stabilisierung des lokalen Strombedarfs und für die Lieferung von Regelenergie zur Stützung des nicht lokalen Stromnetzes nicht ausgelegt und nicht qualifiziert. Eine Verschaltung der dezentralen Speicher zu einer sowohl nicht lokal und als auch lokal wirkenden Anlage erfolgt bisher nicht.

Es wäre daher wünschenswert, ein Energiespeichersystem zur Verfügung zu haben, das gleichzeitig eine Verbesserung von lokaler Netzqualität und die Versorgungssicherheit für nicht lokale Stromnetze ermöglicht und somit als Energiespeichersystem mit genügender Wirkung für beide Zwecke betrieben werden kann.

### Zusammenfassung der Erfindung

Es ist eine Aufgabe der vorliegenden Erfindung, ein Energiespeichersystem, bereitzustellen, das die gleichzeitige Verbesserung von lokaler Netzqualität und Versorgungssicherheit für nicht lokale Stromnetze ermöglicht.

Diese Aufgabe wird gelöst durch ein Energiespeichersystem umfassend ein oder mehrere lokale Energiespeicheranlagen mit einer jeweiligen lokalen Speicherkapazität und lokaler Leistung geeignet zur Aufnahme und Abgabe von Energie an angeschlossene Stromnetze, wobei die ein oder mehreren lokalen Energiespeicheranlagen an ein nicht lokales Stromnetz und/oder jeweils an ein oder mehrere lokale Stromnetze angeschlossen sind und jeweils mindestens eine lokale Steuereinheit umfasst, die zumindest zur Steuerung der jeweiligen Energiespeicheranlage für ortsgebundene Regel- und Systemaufgaben für das oder die jeweiligen lokalen Stromnetze vorgesehen ist und das Energiespeichersystem des Weiteren eine über ein Kommunikationsnetzwerk mit den jeweiligen lokalen Steuereinheiten verbundene zentrale Steuereinheit umfasst, die zur Steuerung der Aufnahme und Abgabe von Energie der ein oder mehreren lokalen Energiespeicheranlagen an das nicht lokale Stromnetz vorgesehen ist, wobei die zentrale Steuereinheit dazu ausgestattet ist, über alle Anteile der lokalen Speicherkapazitäten und der lokalen Leistung der ein oder mehreren Energiespeicheranlagen für nicht ortsgebundene Regel- und Systemaufgaben im nicht lokalen Stromnetz zu verfügen, die von den jeweiligen lokalen Steuereinheiten als für die ortsgebundenen Regel- und Systemaufgaben nicht benötigt über das Kommunikationsnetzwerk zu der zentralen Steuereinheit übermittelt wurden.

Mit der vorliegenden Erfindung können über die dezentral in dem Energiespeichersystem angeordneten Energiespeicheranlagen sowohl die lokale Netzqualität als auch die Versorgungssicherheit in einem nicht lokalen Stromnetz oder Netzverbund realisiert werden. Gerade die Möglichkeit positiver und negativer Energiebereitstellung (Energieeinspeisung und Aufnahme von Energie aus dem Stromnetz) ermöglicht eine flexible Reaktion auf die vorliegenden Stromnetzzustände. Durch die lokale(n) Energiespeicheranlage(n) können effizient die Bedürfnisse in lokalen und nicht lokalen Stromnetzen mit derselben Energiespeicheranlage durch die Interaktion lokaler Steuereinheiten mit einer zentralen Steuereinheit gleichzeitig erfüllt werden. Mit dem erfindungsgemäßen Energiespeichersystem kann auch die Steigerung der technischen und wirtschaftlichen Nutzbarkeit regenerativer Energiequellen erreicht werden, da die fluktuierende lokale Energieerzeugung über die lokalen Energiespeicheranlagen sowohl lokalen als auch nicht lokalen Stromnetzen direkt oder zeitlich gepuffert und an die jeweiligen Netzbedürfnisse angepasst zur Verfügung gestellt werden kann.

Durch den Einsatz ein oder mehrerer lokaler Energiespeicheranlagen als dezentrale Zwischenspeicher mit jeweiligen Anschlüssen an lokale und/oder nicht lokale Stromnetze kann die lokale Netzqualität durch ortsgebundene Regel- und Systemaufgaben vor Ort verbessert und gleichzeitig wird für nicht ortsgebundene Regel- und Systemaufgaben dem nicht lokalen Stromnetz positive Energie (Einspeisung in das Netz) oder negative Energie (Abnahme von Energie aus dem Netz) zur Stromnetzregelung bereitgestellt. Hierbei können die Energiespeicheranlagen entweder jeweils direkt mit einem nicht lokalen Stromnetz und ein oder mehreren lokalen Stromnetzen verbunden sein oder die Energiespeicheranlagen können über ein angeschlossenes lokales Stromnetz indirekt mit einem nicht lokalen Stromnetz verbunden sein, sofern das lokale Stromnetz Teil des nicht lokalen Stromnetzes ist (mit dem nicht lokalen Stromnetz verbunden). Ortsgebundene Regel- und Systemaufgaben sind beispielsweise die Sicherstellung der benötigten lokalen Netzspannung, die Blindleistungskompensation durch Regelung der Amplituden- und Phasenlage des Spannungssignals, das Bereitstellung einer lokalen Leistungsreserve für sich eventuell hinzuschaltende größere Stromabnehmer oder Einschaltstromspitzen und das Speichern von lokalen Energieüberschussmengen. Nicht ortsgebundene Regel- und Systemaufgaben sind beispielsweise die Bereitstellung von primärer oder sekundärer Regelleistung. Die Regelleistung (auch Reserveleistung) gewährleistet die Versorgung von Stromkunden mit genau der benötigten elektrischen Leistung bei unvorhergesehenen Ereignissen im Stromnetz. Dazu können kurzfristig Leistungsanpassungen bei regelfähigen Kraftwerken durchgeführt werden und schnell anlaufende Kraftwerke oder Energiespeicher wie das erfindungsgemäße Energiespeichersystem eingesetzt werden. Die primäre Regelleistung dient dazu, Ungleichgewichte zwischen physikalischem Leistungsangebot und Leistungsnachfrage mit Ziel der Wiederherstellung einer stabilen Netzfrequenz auszugleichen. Die sekundäre Regelleistung soll das Gleichgewicht zwischen physikalischem Stromangebot und Stromnachfrage nach dem Auftreten einer Differenz wieder herzustellen, wobei im Gegensatz zur Primärregelung nur die Situation in der jeweiligen Regelzone inklusive des Stromaustausches mit anderen Regelzonen betrachtet wird. Weitere nicht ortsgebundene Regel- und Systemaufgaben sind außerdem die Bereitstellung von Energiespeicheranlagen zur Unterstützung eines Schwarzstartes, die allgemeine Speicherung von Leistungsspitzen, und die Blindleistungskompensation für die Steigerung der Übertragungsleistung in einem nicht lokalen Stromnetz. Weitere Regel- und Systemaufgaben für lokale- und/oder nicht lokale Stromnetze sind die Bereitstellung von Redundanz (Ausfallsicherheit) bei der Stromversorgung in Kombination mit den bereits vorhandenen Energielieferanten und ein Blindleistungmanagement.

Hierbei bezeichnet das nicht lokale Stromnetz ein Stromnetz, das sich überregional über sehr große Gebiete erstreckt und in dem die nicht ortsgebundenen Regel- und Systemaufgaben durchgeführt werden. Nicht lokale Stromnetze sind beispielsweise Übertragungsnetze (öffentliches Stromnetz). Das öffentliche Stromnetz in Deutschland setzt sich beispielsweise aus vier Übertragungsnetzen zusammen, die von den Netzbetreibern Amprion, 50Hertz, Tennet und TransnetzEnBW betrieben werden. Diese vier Übertragungsnetze bilden zusammen den Netzregelverbund für Deutschland. In anderen Ländern werden entsprechende Übertragungsnetze durch andere Netzbetreiber betrieben. In den Übertragungsnetzen wird die Frequenz des Stromnetzes stabil gehalten (Frequenzregulierung). Das übergeordnete europäische Verbundnetz aus den jeweiligen Übertragungsnetzen in den einzelnen Staaten ist ebenfalls als nicht lokales Stromnetz anzusehen, wofür allerdings derzeit nur die Standards für die Regelenergie festgelegt sind. Die nicht ortsgebundenen Regel- und Systemaufgaben werden in den jeweiligen Übertragungsnetzen durchgeführt. Als lokales Stromnetz im Sinne der Erfindung werden die Stromnetze bezeichnet, in denen die vorstehend beschriebenen ortsgebundenen Regel- und Systemaufgaben durchgeführt werden. Lokale Stromnetze sind in der Regel räumlich stark begrenzt, beispielsweise ein betriebsinternes Stromnetz auf einer Betriebsanlage oder ein Stromnetz innerhalb eines Hauses oder Gebäudekomplexes.

Die erfindungsgemäße Energiespeicheranlage kann dabei jede geeignete Energiespeicheranlage sein, die aufgrund ihrer Speichereigenschaften und Speicherparameter in der Lage ist, neben den ortsgebundenen Regel- und Systemaufgaben zusätzlich nicht ortsgebundene Regel- und Systemaufgaben in nicht lokalen Netzen z.B. über Bereitstellung primärer oder sekundärer Regelleistung zu übernehmen. Geeignete Energiespeicheranlagen sind beispielsweise lokale (dezentrale) Druckluftspeicher oder Wasserstoffspeicher in Kombination mit Brennstoffzellen, Batteriesysteme oder kinematische Energiespeicher wie beispielsweise Schwungradenergiespeicher. In einer Ausführungsform umfasst die Energiespeicheranlage ein oder mehrere Schwungradenergiespeicher zur Aufnahme von Energie aus den angeschlossenen Stromnetzen und zur Abgabe von Energie an die angeschlossenen Stromnetze. Solche Energiespeicheranlagen können dabei modular aus mehreren Schwungradenergiespeichern oder Speichermodulen mit jeweils mehreren Schwungsradenergiespeichern aufgebaut sein. Durch den einfachen modularen Aufbau kann die Speicherkapazität und Leistung der Energiespeicheranlage mit Schwungsradenergiespeichern leicht an den Bedarf angepasst und gegebenenfalls deutlich erweitert werden. Somit kann durch entsprechende Ausgestaltung der Energiespeicheranlage die erforderliche Regelleistung beispielsweise für das Übertragungsnetz bereitgestellt werden. Im Falle eines modularen Aufbaus mit mehreren Speichermodulen in einer lokalen Energiespeicheranlage besitzt jedes Modul einen eigenen Aufschaltpunkt zu den angeschlossenen Stromnetzen und ist über geeignete Komponenten innerhalb der lokalen Energiespeicheranlage verbunden. Schwungradenergiespeicher besitzen den Vorzug, dass sie die aufzunehmenden oder abzugebenden Mengen an Energie sehr variabel und präzise für die Abnehmer bereitstellen können und diese Energie in Form von mechanischer Energie speichern. Damit stellen Schwungradenergiespeicher ein wesentlich kleineres Gefahrenpotential im Brandfall dar als beispielsweise eine größere Ansammlung an Batterien, zusammengeschaltet als Batterie-Energiespeicheranlage oder Wasserstoffspeicheranlagen mit Wasserstofftanks mit dem brennbaren Wasserstoff als Gefahrenpotential. In Druckluftspeicheranlagen können dagegen zwar nicht-brennbare Gase zur Energiespeicherung verwendet werden, dennoch besitzen die Drucklufttanks ein Explosionspotential aufgrund des hohen Drucks in den Drucklufttanks. Somit stellen Schwungradenergiespeicher als Energiespeicheranlagen eine umweltsicherere Technologie für die Energiebereitstellung im Vergleich zu anderen Speichertechnologien dar und sind für beliebig viele Lastzyklen pro Tag gut geeignet. Bei der Energiebereitstellung wird von negativer Energiebereitstellung gesprochen, wenn Energie aus dem Stromnetz aufgenommen und im Schwungradenergiespeicher in Form von mechanischer Rotationsenergie gespeichert wird. Entsprechend wird von positiver Energiebereitstellung gesprochen, wenn die im Schwungradenergiespeicher in Form von mechanischer Rotationsenergie gespeicherte Energie mittels Abbremsen der Schwungräder (oder Rotoren) in das Stromnetz eingespeist wird. Hierbei ist die Fähigkeit von Schwungradspeichern Energie innerhalb von wenigen Millisekunden zur Verfügung stellen zu können ebenso vorteilhaft, wie die Fähigkeit, die spezifizierte Leistung über einen Zeitraum von mehreren Minuten zu liefern. Der Anschluss der lokalen Energiespeicheranlage an das nicht lokale Stromnetz und/oder jeweils an ein oder mehrere lokale Stromnetze kann vom Fachmann geeignet ausgestaltet werden, wobei der Anschluss so ausgestaltet ist, dass die Stromnetze (nicht lokale(s) und/oder lokale(s)) unabhängig voneinander von der Energiespeicheranlage mit Energie versorgt werden können oder aus den Stromnetzen Energie abgenommen werden kann.

Die lokale Steuereinheit bezeichnet eine Komponente in der Energiespeicheranlage, die die Energiespeicheranlage steuert, d.h., die die gewünschten Betriebszustände und Betriebsparameter einstellt und die die Energiespeicheranlage entsprechend eines Betriebsplans, der die gewünschten Betriebszustände als Funktion der Zeit enthält, steuert. Des Weiteren ist die lokale Steuereinheit in der Lage, auf verändernde Verhältnisse im lokalen und nicht lokalen Stromnetz gemäß entsprechender Regel- und Systemaufgaben entsprechend zu reagieren. Hier kann mittels Energieeinspeisung oder Energieaufnahme die Netzqualität des lokalen Stromnetzes erhöht oder konstant gehalten werden oder bei einer Störung im lokalen Stromnetz die Netzqualität wieder verbessert werden und/oder dem nicht lokalen Stromnetz Regelleistung zur Verfügung gestellt werden. Die ortsgebundenen Regel- und Systemaufgaben können von externen Systemen hierbei über das Kommunikationsnetzwerk an die jeweiligen lokalen Energiespeicheranlagen übermittelt werden. Externe Systeme sind hier beispielsweise Steuerungssysteme der Betreiber des lokalen Stromnetzes, lokale Messstellen oder die zentrale Steuereinheit. Die übermittelten Anweisungen entsprechen den ortsgebundenen Regel- und Systemaufgaben für die jeweilige lokale Energiespeichereinheit. Zusätzlich zu den Regel- und Systemaufgaben im lokalen Stromnetz kann die lokale Steuereinheit Befehle, Anweisungen etc. bezüglich des nicht lokalen Stromnetzes von der zentralen Steuereinheit empfangen und diese Befehle oder Anweisungen parallel zu den ortsgebundenen Regel- und Systemaufgaben ausführen. Die zentrale Steuereinheit steuert dabei beispielsweise die Bereitstellung von Regelenergie für das nicht lokale Stromnetz und verfügt zumindest über die freien, nicht für ortsgebundenen Regel- und Systemaufgaben benötigten Kapazitäten und Leistungen (freie nicht lokale Kapazitäten, freie nicht lokale Leistungen) der lokalen Energiespeicheranlagen je nach Bedarf. Die zentrale Steuereinheit kann dazu ein oder mehrere Schnittstellen zu externen Systemen zum Empfang von externen Daten für eine übergeordnete Steuerung des Energiespeichersystems umfassen. Ein solches externes System kann beispielsweise die übergeordnete Steuerung eines Netzverbundes sein, die den Regelleistungsbedarf an die Subsysteme, wie beispielsweise das erfindungsgemäße Energiespeichersystem, zur Bereitstellung der Regelenergie weiter meldet. Weitere externe Systeme können beispielsweise der Leistungsstützungsverbund oder eine Strombörse sein, die anhand der Einspeisungen oder Energieabnahmen in bestimmten Betriebszeiten entsprechend günstig sind. Diese externen Daten können direkt an die zentrale Steuereinheit oder über das Kommunikationsnetzwerk an die zentrale Steuereinheit übermittelt werden. Weitere externe Daten sind beispielsweise der Blindleistungsbedarf, eine Spitzenlastkompensation oder ein gerade benötigter lokaler Speicherbedarf.

Dabei ist die lokale Steuereinheit der Energiespeicheranlage, oder bei mehreren Energiespeicheranlagen im Energiespeichersystem sind die lokalen Steuereinheiten der Energiespeicheranlagen über das Kommunikationsnetz mit der zentralen Steuereinheit zum Betrieb des Energiespeichersystems verbunden. Die Steuerung der jeweiligen Energiespeicheranlage im erfindungsgemäßen Energiespeichersystem wird vor Ort auf Basis der vorliegenden Regel- und Systemaufgaben von der lokalen Steuereinheit ausgeführt, wobei die zentrale Steuereinheit alle Energiespeicheranlagen des Energiespeichersystems kontrolliert und entsprechend den jeweiligen lokalen Steuereinheiten Anweisungen in Form von Regel- und Systemaufgaben zu deren Ausführung vor Ort übermittelt. Diese übermittelten Regel- und Systemaufgaben sind zumindest die nicht ortsgebundenen Regel- und Systemaufgaben spezifiziert durch die zentrale Steuereinheit für die jeweiligen lokalen Energiespeicheranlagen, da der Gesamtüberblick über die benötigte Regelung für das nicht lokale Stromnetz bei der zentralen Steuereinheit vorliegt. Dabei können die lokalen Energiespeicheranlagen die jeweilige Ausführung der vorgegebenen nicht ortsgebundenen Regel- und Systemaufgabe bei Bedarf lokal geeignet anpassen, beispielsweise auf Basis der vor Ort gemessenen Daten im nicht lokalen Stromnetz. Für die Ausführung der nicht ortsgebundenen Regel- und Systemaufgaben muss die lokale Energiespeicheranlage nicht einmal direkt mit dem nicht lokalen Stromnetz verbunden sein. Es reicht dafür aus, dass die lokale Energiespeicheranlage indirekt mit dem nicht lokalen Stromnetz über ein lokales Stromnetz, das Teil des nicht lokalen Stromnetzes ist, verbunden ist. In diesem Fall wirkt die Einspeisung oder Entnahme von Energie in/aus das/dem lokalen Stromnetz gleichermaßen für das nicht lokale Stromnetz. Die ortsgebundenen Regel- und Systemaufgaben für die jeweiligen lokalen Energiespeicheranlagen zur Ausführung in den angeschlossenen lokalen Stromnetzen können den lokalen Energiespeicheranlagen unabhängig von der zentralen Steuereinheit übermittelt werden und/oder zusätzlich zu den nicht ortsgebundenen Regel- und Systemaufgaben ebenfalls durch die zentrale Steuereinheit übermittelt werden. Die von der zentralen Steuereinheit an die lokalen Energiespeicheranlagen übermittelten ortsgebundenen Regel- und Systemaufgaben können dabei die Aufgaben des Energiespeichersystems in Gänze oder speziell für regionale Zwecke berücksichtigen. So kann beispielsweise aufgrund geänderter äußerer Einflüsse auf Energiespeichersystemebene ein Bedarf entstehen, die lokale Leistungsreserve oder die Speicherung von lokalen Energieüberschussmengen von ein oder mehreren lokalen Energiespeicheranlagen gegenüber den vorherigen ortsgebundenen Regel- und Systemaufgaben anzupassen. Die zentrale Steuereinheit würde entsprechend für diese lokalen Energiespeicheranlagen neue ortsgebundene Regel- und Systemaufgaben erstellen und übermitteln, die dann von den jeweiligen lokalen Steuereinheiten vor Ort für die einzelnen Energiespeicheranlagen durchgeführt werden. Beispielsweise muss aufgrund einer erwarteten höheren Windstärke eine größere Menge an Windenergie aus einer Windenergieanlage zwischengespeichert werden. Die betreffenden lokalen Energiespeicheranlagen in der Nähe der Windenergieanlage haben keine genügenden Speicherkapazitäten dafür frei, da die lokalen Energiespeicheranlagen bereits zu voll geladen sind. In diesem Fall steuert die zentrale Steuereinheit einen Energietransfers zu anderen, nicht voll geladenen Energiespeicheranlagen, um vor Ort ausreichend Speicherkapazität bereit zu stellen, um die erwartete Windenergiemenge mit den lokalen Energiespeicheranlagen vor Ort speichern zu können.

Dazu müssen die zentrale Steuereinheit und die jeweiligen lokalen Steuereinheiten über ein Kommunikationsnetzwerk verbunden sein. Das Kommunikationsnetz kann vom Fachmann im Rahmen der vorliegenden Erfindung geeignet ausgestaltet werden. Beispielsweise ist das Kommunikationsnetz ein funkbasiertes Netz oder Mobilfunknetz, eine Hochverfügbarkeitsverbindung oder ein Netz nach IECG. Alternativ könnte das Kommunikationsnetz auch als ein kabelgebundenes Telefonnetz oder über ein Computernetz (beispielsweise das Internet) ausgestaltet sein. In einer Ausführungsform umfasst das Kommunikationsnetzwerk mehrere unterschiedliche Arten von Netzwerken (Sub-Kommunikationsnetze) und entsprechende Schnittstellen zu der zentralen Steuereinheit und der oder den lokalen Energiespeicheranlagen und/oder der oder den lokalen Steuereinheiten. Durch das Vorhandensein mehrerer Sub-Kommunikationsnetze im Kommunikationsnetzwerk wird die Ausfallgefahr des gesamten Kommunikationsnetzwerks deutlich verringert, da bei Ausfall einer Netzwerkart alternative Netzwerkarten für die ungestörte Kommunikation zwischen zentraler Steuereinheit und den lokalen Steuereinheiten zur Verfügung stehen. Vorzugsweise umfasst das Kommunikationsnetzwerk kabel-, funk- und stromgebundene Sub-Kommunikationsnetze.

In einer Ausführungsform umfasst das Energiespeichersystem eine Mehrzahl an lokalen Energiespeichern, die an räumlich unterschiedlichen Positionen angeordnet und an jeweils unterschiedliche lokale Stromnetze mit unterschiedlichen Aufgaben angeschlossen sind. Die räumlich unterschiedlichen Positionen erlauben eine Verteilung der Energiespeicheranlagen über größere Gebiete oder Regionen, so dass eine nicht lokale Bereitstellung von Energie an das nicht lokale Stromnetz auch ortsnahe erfolgen kann. Im Gegensatz dazu müsste die Energie, die beispielsweise durch ein großes Pumpspeicherwerk bereitgestellt wird, gegebenenfalls über weite Strecken im nicht lokalen Stromnetz bis zum Verbraucher transportiert werden. Bei einer räumlich verteilten Aufstellung der lokalen Energiespeicheranlage im erfindungsgemäßen Energiespeichersystem kann zumindest ein Teil der benötigten Energie ortsnah beim Verbraucher ins nicht lokale Stromnetz eingespeist werden.

In einer Ausführungsform umfasst die lokale Energiespeicheranlage ein oder mehrere Messeinheiten zur Messung ein oder mehrerer relevanter Daten im jeweilig angeschlossenen Stromnetz. Die Steuereinheit ist dabei dazu vorgesehen, die Steuerung der lokalen Energiespeicheranlage für das jeweilige angeschlossene Stromnetz auf Basis der gemessenen relevanten Daten auszuführen. Die Messeinheiten können im lokalen Stromnetz integriert oder an ein oder mehreren Stellen am lokalen Stromnetz angeordnet sein. Die Messeinheiten können auch am Verbindungspunkt zwischen lokaler Energiespeicheranlage und lokalem Stromnetz angeordnet sein. Ist das lokale Stromnetz an das nicht lokale Stromnetz angeschlossen, werden damit auch die relevanten Daten des nicht lokalen Stromnetzes gemessen. Ist das lokale Stromnetz dagegen separat angeschlossen, so sind die Messeinheiten im nicht lokalen Stromnetz integriert oder an ein oder mehreren Stellen am nicht lokalen Stromnetz angeordnet. Die Messeinheiten können auch am Verbindungspunkt zwischen lokaler Energiespeicheranlage und nicht lokalem Stromnetz angeordnet sein. Messeinheiten im Rahmen der vorliegenden Erfindung sind beispielsweise Messsonden zur Messung der Netzfrequenz und Netzspannung als Beispiel für relevante Daten für das angeschlossene lokale Stromnetz. Weitere Messgrößen sind beispielsweise der Spannungsverlauf als Funktion der Zeit, Phasenwinkel, Sternpunkt, Frequenz, Strom usw. Der Fachmann kann im Rahmen der vorliegenden Erfindung geeignete Messeinheiten oder Messsonden auswählen und an der geeigneten Position anordnen. Sei beispielsweise die gewünschte Netzfrequenz 50 Hz und stellen die Messeinheiten ein Absinken der Netzfrequenz fest, so wird die lokale Steuereinheit automatisch auf Basis der aktuellen gemessenen Netzfrequenz (als gemessene relevante Daten) und einer in der lokalen Steuereinheit hinterlegten Reaktionsfolge Energie in das lokale Stromnetz einspeisen (ortsgebundene Regel- und Systemaufgabe), bis die Netzfrequenz wieder auf dem gewünschten Wert liegt. Weitere Beispiele sind die Messung des Phasenwinkels im lokalen Netz um die entsprechende Bildleistungskompensation bereitzustellen oder die Spannungsmessung im Falle von zu viel oder zu wenig Lastabnahme im lokalen Netz zum Erhalt der Spannungsqualität. Für andere Regel- und Systemaufgaben sind entsprechende andere Reaktionsfolgen in der lokalen Steuereinheit hinterlegt. Die lokale Energiespeicheranlage umfasst dazu eine Regeleinheit, an die das eine oder mehrere lokale Stromnetze und das nicht lokale Stromnetz angeschlossen sind, wobei die Regeleinheit dazu ausgestaltet ist, einen Energiefluss zwischen den angeschlossenen Stromnetzen und der Energiespeicheranlage zu regeln. Die Regeleinheit umfasst eine Regelbox mit einem Regelglied und separaten Trennschaltern für jedes der angeschlossenen Stromnetze, wobei die lokale Steuereinheit über eine Datenverbindung mit dem Regelglied zur Übermittlung von Konfigurationsdaten gemäß einer Reglerfunktion zur Steuerung der Energieflüsse verbunden ist. Wären die lokalen und nicht lokalen Stromnetze lediglich mit dem Aufschaltpunkt der Energiespeicheranlage verbunden, so würde die von der lokalen Energiespeicheranlage eingespeiste Energie nur in das Stromnetz eingespeist werden, das den größeren Energiebedarf hat. Hiermit könnte aber nicht mehr gezielt gemäß einer Aufgabenverteilung geregelt werden. Gegenwärtige Energiespeicher sind typischerweise über einen Schalter mit einem einzigen Stromnetz verbunden. Hier würde die vor stehende Steuerung des Energieflusses entfallen und der Schalter bräuchte lediglich bei einem Netzausfall geöffnet werden. In der vorliegenden Erfindung ist die Regeleinheit dagegen derart ausgestattet, dass nach Abtrennen des einen Stromnetzes die anderen angeschlossenen Stromnetze weiterhin wie gewünscht mit Energie versorgt werden oder aus diesen Energie aufgenommen werden kann, da die lokalen Energiespeicheranlagen im Rahmen der vorliegenden Erfindung simultan eine Mehrzahl an getrennten Stromnetzen versorgen muss. Die Regeleinheit steuert den Energiefluss zu den angeschlossenen Netzen in der von der lokalen Steuerung vorgesehenen Weise. In einer bevorzugten Ausführungsform ist die Regeleinheit außerdem dazu vorgesehen, ein oder mehrere der angeschlossenen Stromnetze im Bedarfsfall von der lokalen Energiespeicheranlage zu trennen. Sollte eines der angeschlossenen Stromnetze ausfallen, so trennt die Regeleinheit dieses Stromnetz unter Umständen sofort innerhalb weniger Millisekunden von der Energiespeicheranlage, damit diese weiterhin für die anderen Stromnetze betriebsbereit bleibt. Ansonsten würde ggf. ein Kurzschluss oder eine Überlastsituation eintreten.

In einer weiteren Ausführungsform bekommt die zentrale Steuereinheit Betriebsdaten von den lokalen Steuereinheiten über das Kommunikationsnetz übermittelt und übermittelt dann aufgrund dieser Betriebsdaten der oder den lokalen Energiespeicheranlagen zumindest nicht ortsgebundene Regel- und Systemaufgaben zur Abgabe von Energie an dem nicht lokalen Stromnetz und/oder zur Aufnahme von Energie aus dem nicht lokalen Stromnetz über das Kommunikationsnetz. Die Betriebsdaten der lokalen Energiespeichereinheit geben beispielsweise an, welche freie Kapazität und frei Leistung (die Kapazität und Leistung, die nicht für die ortsgebundenen Regel- und Systemaufgaben benötigt werden) die lokale Energiespeicheranlage für nicht ortsgebundene Aufgaben bereitstellen kann. Der Zeittakt beträgt üblicherweise 1 Hertz oder weniger. Insofern kann die zentrale Steuereinheit die nicht ortsgebundenen Regel- und Systemaufgaben mit dieser übermittelten, freien Kapazität und freien Leistungen planen und beauftragen. In einem Energiespeichersystem mit einer Vielzahl an lokalen Energiespeicheranlagen mit eine Vielzahl an freien Kapazitäten und freien Leistungen, die für die einzelnen Energiespeicheranlagen je nach Gesamtkapazität und Gesamtleistung der einzelnen Energiespeicheranlage und deren Aufgaben für das lokale Stromnetz gegebenenfalls sehr unterschiedlich sein können, kann die zentrale Steuereinheit sehr flexibel und reaktionsschnell Kapazitäten und Leistungen für die Einspeisung in das nicht lokale Stromnetz oder für die Energieabnahme aus dem nicht lokalen Stromnetz über entsprechende Anweisungen (übermittelte nicht ortsgebundene Regel- und Systemaufgaben) an die lokalen Steuereinheiten der jeweiligen Energiespeicheranlagen veranlassen. Hierbei kann die zentrale Steuereinheit sogar lokal unterschiedliche Aufgaben an die lokalen Steuerreinheiten vergeben. Beispielsweise kann die zentrale Steuereinheit zur Stützung des nicht lokalen Stromnetzes nahe eines größeren Verbrauchers die lokalen Steuerreinheiten der Energiespeicheranlagen, die ebenfalls in der Nähe dieses Verbrauchers angeordnet sind und deren Positionen der zentralen Steuereinheit bekannt sind, zur Einspeisung (Abgabe) von Energie in das nicht lokale Stromnetz über entsprechend übermittelte Regel- und Systemaufgaben veranlassen. Im gleichen nicht lokalen Stromnetz (oder einem weiteren nicht lokalen Stromnetz) kann die zentrale Steuereinheit den lokalen Steuereinheiten anderer Energiespeicheranlagen, die geographisch weit entfernt von den vorgehend beschriebenen Energiespeicheranlagen stehen, Regel- und Systemaufgaben zur Abnahme von Energie aus dem nicht lokalen Stromnetz übermitteln. Somit kann die zentrale Steuereinheit bei einer Vielzahl an geographisch an unterschiedlichen Positionen angeordneten Energiespeicheranlagen flexibel und den regionalen Gegebenheiten angepasst entsprechende nicht ortsgebundene Regel- und Systemaufgaben per entsprechender individuell ausgerichteter Übermittlung an die jeweiligen lokalen Steuereinheiten zuteilen. Die zentrale Steuereinheit kann den lokalen Energiespeicheranlagen aber auch neue oder geänderte ortsgebundene Regel- und Systemaufgaben auf Basis der Betriebsdaten übermitteln.

In einer weiteren Ausführungsform umfasst die lokale Energiespeicheranlage einen Aufgabenspeicher zur Speicherung der ortsgebundenen und nicht ortsgebundenen Regel- und Systemaufgaben, der von der zentralen Steuereinheit zumindest bezüglich der nicht ortsgebundenen Regel- oder Systemaufgaben im nicht lokalen Stromnetz konfiguriert und/oder aktualisiert wird und auf den die lokale Steuereinheit zur Steuerung des lokalen Energiespeichers gemäß der ortsgebundenen und nicht ortsgebundenen Regel- oder Systemaufgaben zugreift. Der Begriff "konfigurieren" bezeichnet die erstmalige Speicherung von Regel- und Speicheraufgaben in dem Aufgabenspeicher. Der Begriff "aktualisieren" bezeichnet das Hinzufügen weiterer, zeitlich späterer Regel- und Systemaufgaben oder das Abändern bereits gespeicherter Regel- und Systemaufgaben. Das Konfigurieren und Aktualisieren kann sich aber auch auf ortsgebundene Regel- und Systemaufgaben beziehen, die möglicherweise ebenfalls von der zentralen Steuereinheit übermittelt werden. Der Aufgabenspeicher kann ein geeigneter Datenspeicher in der Energiespeicheranlage sein. Er kann dabei als Teil der lokalen Steuereinheit ausgeführt sein oder ein separater Speicher sein. In beiden Fällen ist die lokale Steuereinheit so mit dem Aufgabenspeicher verbunden, dass sie auf den Aufgabenspeicher jederzeit zugreifen, die darin gespeicherten Regel- und Systemaufgaben auslesen und gemäß dieser die lokalen Energiespeicheranlage steuern kann. Der Fachmann kann im Rahmen der vorliegenden Erfindung den schaltungstechnischen Zugriff der lokalen Steuereinheit auf den Aufgabenspeicher und auf die anzusteuernden Speichermodule der Energiespeicheranlage geeignet ausgestalten. Die Anweisungen zu den Regel- und Systemaufgaben können im Aufgabenspeicher beispielsweise als Vorschrift "Speicher aus dem nicht lokalen Stromnetz xx kWh am y.Tag ab zz Uhr" gespeichert sein. In einem anderen Beispiel könnte die Anweisung im Aufgabenspeicher als "Speise heute ab zz Uhr xx kW pro Stunde in das lokale Stromnetz ein". Das konkrete Datenformat der Anweisungen kann vom Fachmann im Rahmen der vorliegenden Erfindung geeignet gewählt werden. Diese Anweisungen (oder Aufgaben) im Aufgabenspeicher können beispielsweise eine Regelleistung oder eine Spannungs- oder Stromstabilisierung betreffen. Die Anweisungen (oder Aufgaben) können dabei mit oder ohne Zeitbezug abgespeichert werden. Eine Anweisung (oder Aufgabe) ohne Zeitbezug könnte beispielsweise "liefere in Abhängigkeit der Stromnetzfrequenzabweichung von 50 Hz entsprechend einer Vorgabekurve die entsprechende Regelleistung" lauten.

In einer weiteren Ausführungsform ist die lokale Steuereinheit dazu ausgestaltet, den ortsgebundenen Regel- und Systemaufgaben zur Steuerung der jeweiligen Energiespeicheranlage Vorrang vor den nicht ortsgebundenen Regel- und Systemaufgaben zu geben. Da im erfindungsgemäßen Energiespeichersystem in der Regel eine Vielzahl an lokalen Energiespeicheranlagen vorhanden ist, kann die zentrale Steuereinheit im Normalfall auf eine ausreichende Anzahl an Energiespeicheranlagen und damit auf eine ausreichende freie Kapazität zurückgreifen, ohne dass dabei die ortsgebundenen Regel- und Systemaufgaben vernachlässigt oder gar missachtet werden müssen. Beispielsweise 20 Anlagen à 1,6 MWh im Systemverbund entsprechen 32 MWh. Lokal reserviert sind z.B. jeweils 1MWh. Dies ergibt eine verfügbare Kapazität für nicht lokale Aufgaben von 12 MWh. Dabei wären gleichzeitige Anforderungen an die Bereitstellung von weiterer Leistung zusätzlich zu betrachten und ggf. zu berücksichtigen. Bei lediglich einer einzigen Energiespeicheranlage im Energiespeichersystem ist die freie Kapazität bzw. Leistung entweder ausreichend, um die nicht ortsgebundenen Regel- und Systemaufgaben im Normalfall mit zu erfüllen oder die zusätzliche Kapazität, die für ortsgebundenen Regel- und Systemaufgaben reserviert ist, würde als mögliche Reserve im Ausnahmefall zur Lösung des Netzproblems nicht ausreichen. Daher ist der Vorrang für ortsgebundene Regel- und Systemaufgaben auch bei einer einzigen lokalen Energiespeicheranlage im erfindungsgemäßen Energiespeichersystem vorteilhaft

In einer weiteren Ausführungsform ist die lokale Energiespeicheranlage bei Ausfall des Kommunikationsnetzwerkes und/oder der zentralen Steuereinheit zur ausschließlichen Durchführung der ortsgebundenen Regel- und Systemaufgaben für das oder die jeweiligen lokalen Stromnetze im Aufgabenspeicher vorgesehen. Die Bevorzugung ortsgebundener Regel- und Systemaufgaben bei gestörter Kommunikation mit der zentralen Steuereinheit ist vorteilhaft, da nach einem Ausfall der Kommunikation mit der zentralen Steuereinheit die jeweiligen lokalen Steuereinheiten keine Rückmeldung mehr über aktualisierte Aufgabenspeicher oder den augenblicklichen Bedarf oder Zustand des nicht lokalen Stromnetzes bekommen. Sofern die lokalen Steuereinheiten einfach die vorliegenden Aufgaben ohne Rückmeldung der zentralen Steuereinheit abarbeiten würden, könnte dies in besonderen Zuständen des nicht lokalen Stromnetzes sogar zu einem Ausfall des Stromnetzes in Folge von Überlastung führen. Daher ist es vorteilhaft, im Falle gestörter Kommunikationswege zur zentralen Steuereinheit oder gar bei Ausfall der zentralen Steuereinheit selbst nur die ortsgebundenen Regel- und Systemaufgaben durchzuführen, zu denen die lokale Energiespeicheranlage verpflichtet ist, und wobei die Zweckmäßigkeit dieser lokalen Aufgaben gegebenenfalls über eigene Messeinheiten der Energiespeicheranlage selbst lokal überwacht werden kann. Die lokalen Aufgaben können gegebenenfalls vor Ort über eine Änderung im Aufgabenspeicher geändert werden. Für das nicht lokale Stromnetz kann diese so nicht durchgeführt werden, da die Bedürfnisse des nicht lokalen Stromnetzes auch von den Eingriffen anderer Kraftwerke, Verbraucher- oder Speicheranlagen abhängen, die nur über die zentrale Steuereinheit in das Energiespeichersystem Eingang finden.

In einer weiteren Ausführungsform ist die zentrale Steuereinheit dazu vorgesehen, zu bestimmen, welche der lokalen Energiespeicheranlagen für eine Schwarzstartunterstützung bereitstehen und dass die Schwarzstartunterstützung Vorrang vor den ortsgebundenen Regel- und Systemaufgaben für das oder die jeweilig angeschlossenen lokalen Stromnetze hat. Als Schwarzstart wird allgemein das Anfahren eines Energielieferanten, beispielsweise ein Kraftwerk oder ein Energiespeicher, nach einem Netzausfall bezeichnet, wenn dies unabhängig vom Stromnetz geschieht. Unter Schwarzstartfähigkeit versteht man die Fähigkeit eines solchen Energielieferanten, unabhängig vom Stromnetz vom abgeschalteten Zustand ausgehend hochzufahren beziehungsweise Energie aus einem Energiespeicher abzugeben. Dies ist insbesondere bei einem flächendeckenden Ausfall des nicht lokalen Stromnetzes von Bedeutung, um das nicht lokale Stromnetz wieder in Betrieb zu nehmen. Die Energie schwarzstartfähiger Kraftwerke oder Energiespeicheranlagen kann dann zum Anfahren nichtschwarzstartfähiger Kraftwerke oder Energiespeicheranlagen verwendet werden.

Beispielsweise benötigen Wärmekraftwerke ein hohes Maß an elektrischer Energie, bevor sie selber elektrische oder thermische Leistung bereitstellen können. Stellt man einem Kohle- oder Kernkraftwerksblock eine oder mehrere erfindungsgemäße schwarzstartfähige lokale Energiespeicheranlagen im Rahmen des erfindungsgemäßen Energiespeichersystems mit ausreichender Leistung zur Seite, so kann für das Gesamtsystem auch hier eine Schwarzstartfähigkeit erreicht werden.

In einer weiteren Ausführungsform umfasst die zentrale Steuereinheit ein oder mehrere Schnittstellen zu externen Systemen zum Empfang von externen Daten für eine übergeordnete Steuerung des Energiespeichersystems und ist dazu vorgesehen, anhand dieser externen Daten einzelne oder eine Anzahl an lokalen Energiespeicheranlagen zu bestimmen, die für nicht ortsgebundene Regel- oder Systemaufgaben im nicht lokalen Stromnetz bevorzugt gegenüber anderen lokalen Energiespeicheranlagen vorgesehen sind und einen Verbund für das nicht lokale Stromnetz bilden. Als Regelverbund wird hier der Zusammenschluss mehrerer Energiespeicheranlagen für die gemeinsame Reaktion auf Bedürfnisse im nicht lokalen Stromnetz verstanden. Die externen Systeme sind beispielsweise eine Netzverbundsteuerung zur Meldung eines Regelleistungsbedarfs, einer benötigten Leistungsunterstützung, eines Blindleistungsbedarf, einer benötigten Spitzenlastkompensation oder eines benötigten Speicherbedarfs. Die externen Daten können aber auch ortsgebundene Regel- und Systemaufgaben umfassen, wie beispielsweise eine Aufrechterhaltung der Netzspannung in lokalen Stromnetzen, eine Spitzenlastkompensation in diesen lokalen Stromnetzen, ein Blindleistungsbedarf für die lokalen Stromnetze oder ein lokaler Energiespeicherbedarf. In einer Ausführungsform werden auch die externen Daten zu ortsgebundenen Regel- und Systemaufgaben von der zentralen Steuereinheit gespeichert und verarbeitet und an die jeweiligen lokalen Energiespeichereinheiten über das Kommunikationsnetzwerk weitergeleitet. Zur Speicherung der externen Daten umfasst die zentrale Steuereinheit entweder einen Datenspeicher oder ist mit einem solchen Datenspeicher verbunden und hat Zugriff auf diesen. Dieser Datenspeicher kann jeder geeignete Datenspeicher sein, beispielsweise ein Server oder eine Datenbank, vorzugsweise über entsprechende Datenleitungen und Komponenten angeschlossen an das Kommunikationsnetzwerk. Über die Schnittstellen erhält die zentrale Steuereinheit aktuelle Bedarfsmeldungen, so dass der Aufgabenspeicher in den lokalen Steuereinheiten immer auf den aktuellen Stand gebracht werden kann und die lokalen Steuereinheiten jederzeit aktuell auf die Bedürfnisse sowohl im nicht lokalen als auch in den lokalen Stromnetzen mit Abgabe oder Aufnahme von Energie aus den lokalen Energiespeichern reagieren können.

In einer weiteren Ausführungsform ist die zentrale Steuereinheit dazu vorgesehen, anhand von lokalen oder regionalen Einflussdaten einzelne oder eine Anzahl an lokalen Energiespeicheranlagen zu bestimmen, die einen regionalen Verbund aus den bestimmten Energiespeicheranlagen bilden und ihre zusätzlichen oder veränderten vorrangigen ortsgebundenen Regel- und Systemaufgaben als regionale Regel- und Systemaufgaben zu übermitteln. Lokale oder regionale Einflussdaten bezeichnen beispielsweise Umweltdaten, die Einfluss auf die in ein Stromnetz einzuspeisende Energie haben, wie Windstärke, Sonnenintensität und Sonnenscheindauer oder Temperatur. Anhand solcher Einflussdaten können die Energiemengen, die beispielsweise in Energieanlagen zur Nutzung regenerativer Energien wie in Windenergieanlagen oder Solarkraftwerken erzeugt werden, auch kurzfristig abgeschätzt werden. Verändern sich die lokalen Umweltdaten (Einflussdaten) gegenüber einer früheren Vorhersage, so kann beispielsweise wesentlich mehr oder wesentlich weniger Energie von solchen Energieanlagen tatsächlich in das Stromnetz eingespeist werden. Entsprechend können erfindungsgemäße regionale Verbunde die eventuell überschüssige Menge an Energie speichern und zu einem späteren Zeitpunkt an das Stromnetz abgeben. Wird ein lokales Stromnetz beispielsweise aus solchen Energieanlagen wie Windenergieanlagen oder Solarkraftwerken gespeist und steht absehbar aus den Einflussdaten aus diesen Energieanlagen weniger Energie als geplant zur Verfügung, können die jeweiligen an das lokale Stromnetz angeschlossenen lokalen Energiespeicheranlagen die fehlende Energie dem lokalen Stromnetz zur Verfügung stellen. Als regionaler Verbund wird hier der Zusammenschluss mehrerer Energiespeicheranlagen für die gemeinsame Reaktion auf Bedürfnisse in einem oder mehreren lokalen Stromnetzen verstanden. Hierbei können durchaus auch Energien für bestimmte ortsgebundene Regel- und Systemaufgaben über das nicht lokale Stromnetz zu einer geographisch an einer anderen Position angeordneten Energiespeicheranlagen dieses regionalen Verbunds verschoben werden. Benötigt beispielsweise eine lokale Energiespeicheranlage für ihr angeschlossenes lokales Stromnetz eine Energieeinspeisung aus deren Energiespeichermodulen in dieses lokale Stromnetz und hat diese Energiespeicheranlage dafür nicht die notwendige Energiemenge in ihren Speichermodulen gespeichert, so kann sie diese Energie auch von einer anderen an einem anderen Ort angeordneten lokalen Energiespeicheranlage zur Verfügung gestellt bekommen, ohne dass dafür diese andere lokale Energiespeicheranlage an dasselbe lokale Stromnetz wie die Energiespeicheranlage mit zu geringer verfügbarer Energie angeschlossen sein muss. Die lokalen Energiespeicheranlagen sind innerhalb des Energiespeichersystems alle über das nicht lokale Stromnetz miteinander verbunden. Vorzugsweise transferieren diejenigen lokalen Energiespeicheranlagen Strom zu der strombedürftigen Energiespeicheranlage, die selber für die kurzfristige Aufnahme (Speicherung) von Energie vorgesehen sind und dafür aber bereits zu voll geladen sind. Somit kann ein Energiespeichermanagement innerhalb des erfindungsgemäßen Energiespeichersystems durchgeführt werden. Nur bei Ausfall des nicht lokalen Stromnetzes wäre dies nicht mehr der Fall. In diesem Fall stellen alle von diesem Ausfall betroffenen lokalen Energiespeicheranlagen autarke Energiespeicheranlagen zur Versorgung der lokalen Stromnetze dar. Dieser Energieübertrag von einer lokalen Energiespeicheranlage zu einer anderen lokalen Energiespeicheranlage kann insbesondere dann wünschenswert sein, wenn die abgebende lokale Energiespeicheranlage für die baldige Aufnahme von Energie aus einem lokalen Stromnetz, beispielsweise für einen Windenergiepark oder ein Solarkraftwerk, im Rahmen derer ortsgebundenen Regel- und Systemaufgaben vorgesehen ist.

In einer weiteren Ausführungsform sind die Steuereinheiten der Energiespeicheranlagen des Regelverbunds und/oder des regionalen Verbunds dazu ausgestaltet, über das Kommunikationsnetzwerk zur Ausführung der nicht ortsgebundenen Regel- oder Systemaufgaben und/oder regionalen Regel- und Systemaufgaben ohne Einbeziehung der zentralen Steuereinheit direkt miteinander zu kommunizieren. Dadurch wird die zentrale Steuereinheit entlastet und die Regelung im Verbund beschleunigt. Die in einem Regelverbund zusammengeschlossenen lokalen Energiespeicheranlagen können andere Anlagen sein als die in einem regionalen Verbund zusammengeschlossenen lokalen Energiespeicheranlagen. Es kann aber auch der Fall auftreten, dass die lokalen Energiespeicheranlagen im Regelverbund die gleichen Anlagen wie in einem regionalen Verbund sind.

In einer weiteren Ausführungsform überträgt die zentrale Steuereinheit die Aufgabe zur Steuerung des Regelverbunds und/oder des regionalen Verbunds zumindest zeitweise an eine von der zentralen Steuereinheit bestimmten lokalen Steuereinheit im Regelverbund und/oder im regionalen Verbund. Diese Übertragung wird beispielsweise im Aufgabenspeicher der bestimmten Energiespeicheranlage abgespeichert und von der betreffenden lokalen Steuereinheit als führende Steuereinheit an die weiteren lokalen Steuereinheiten der anderen lokalen Energiespeicheranlagen im Verbund über das Kommunikationsnetz weitergeleitet. Dadurch ist die Gesamtsteueraufgabe definiert, so dass alle lokalen Energiespeicheranlagen in einem für die Regel- und Systemaufgaben definierten Verhältnis zueinander stehen und somit effektiv im Verbund arbeiten können. In einer bevorzugten Ausführungsform übermittelt die zentrale Steuereinheit zusammen mit der Übertragung der Steueraufgabe eine Hierarchie der lokalen Steuereinheiten im Regelverbund und/oder im regionalen Verbund, wobei die in der Hierarchie folgende lokale Steuereinheit bei Ausfall der mit der Steuerung beauftragten Steuereinheit oder der entsprechenden lokalen Energiespeicheranlage zur Steuerung des Regelverbunds und/oder des regionalen Verbunds vorgesehen ist. Somit besitzt der Verbund auch bei Ausfall der führenden lokalen Steuereinheit eine definierte Aufgabenverteilung, und die entsprechend nächste lokale Steuereinheit übernimmt die Führung im Verbund. Diese Hierarchie wird beispielsweise ebenfalls in den Aufgabenspeichern der lokalen Steuereinheiten der lokalen Energiespeicheranlagen des jeweiligen Verbunds gespeichert. Bei Ausfall der führenden lokalen Steuereinheit oder der gesamten Energiespeicheranlage sind die anderen lokalen Steuereinheiten dazu ausgestaltet, die in der Hierarchie folgende lokale Steuereinheit als führende Steuereinheit anzuerkennen und Weisungen von dieser Steuereinheit entsprechend entgegen zu nehmen. Dieser Führungswechsel kann von den lokalen Steuereinheiten beispielsweise durch gegenseitige automatisch erstellte und über das Kommunikationsnetzwerk ausgesandte Benachrichtigungen bestätigt werden

In einer weiteren Ausführungsform ist die lokale Steuereinheit dazu ausgestaltet, die bestehende Verbindung zur zentralen Steuereinheit oder zu weiteren im Verbund integrierten lokalen Steuereinheiten über das Kommunikationsnetz periodisch zu prüfen. In einem so genannten digitalen Handschlag wird das Bestehen der Kommunikationsverbindung geprüft. Hierzu sendet die lokale Steuereinheit ein Datenpaket zu der zentralen Steuereinheit und erhält als Reaktion darauf ein entsprechendes Datenpaket zurück übermittelt. Die erfolgte Absendung und erhaltene Rücksendung wird von der lokalen Steuereinheit protokolliert und abgespeichert, beispielsweise auf einem Server oder in einer Datenbank. Alternativ kann der vorstehend beschriebene digitale Handschlag auch von den jeweiligen zentralen Steuereinheiten initiiert werden. In einer bevorzugten Ausführungsform wird der digitale Handschlag über das Kommunikationsnetzwerk auch zwischen den lokalen Steuereinheiten direkt durchgeführt. Auf diese Weise wird jederzeit festgestellt, ob eine Kommunikation zwischen der zentralen Steuereinheit und den lokalen Steuereinheiten möglich ist. Insofern kann eine unterbrochene Kommunikation nicht als nicht erfolgte Aktualisierung der nicht ortsgebundenen Regel- und Systemaufgaben mit einem entsprechenden Fortfahren der letzten Regel- und Systemaufgabe missverstanden werden. Bei unterbrochener Kommunikation könnte eine andere Regel- und Systemaufgabe notwendig sein, ohne dass die lokalen Steuereinheiten davon unterrichtet werden können. Daher beschränkt sich die lokale Steuereinheit bei unterbrochener Kommunikation auf die ortsgebundenen Regel- und Systemaufgaben.

In einer weiteren Ausführungsform ist die lokale Steuereinheit dazu ausgestaltet, im Falle einer unterbrochenen Verbindung zur zentralen Steuereinheit diese Verbindung über ein im Kommunikationsnetz vorhandenes alternatives Sub-Kommunikationsnetz wieder herzustellen. Durch die Redundanz im Kommunikationsnetzwerk ist es möglich, über das alternative Sub-Kommunikationsnetz eine möglicherweise wichtige Aktualisierung der nicht ortsgebundenen Regel- und Systemaufgaben zu erhalten. Mögliche Sub-Kommunikationsnetze sind beispielsweise funkbasierte, kabelbasierte oder stromgebundene Kommunikationsnetze wie beispielsweise das Mobilfunknetz, das Internet, das normale Telefonnetz oder das Stromnetz, wo eine Datenverbindung über die Stromkabel im Stromnetz hergestellt wird.

Die Erfindung betrifft des Weiteren ein Verfahren zum Betrieben eines Energiespeichersystems gemäß der vorliegenden Erfindung, umfassend ein oder mehrere lokale Energiespeicheranlagen mit einer jeweiligen lokalen Speicherkapazität und lokaler Leistung, die zur Aufnahme und Abgabe von Energie aus/an angeschlossene Stromnetze geeignet sind, umfassend die Schritte
- Steuern der jeweiligen lokalen Energiespeicheranlage für ortsgebundene Regel- und Systemaufgaben in ein oder mehreren an die lokale Energiespeicheranlage angeschlossenen lokalen Stromnetzen mittels einer lokalen Steuereinheit im Rahmen der für das oder die lokalen Stromnetze vorgesehenen Kapazität und Leistungen der Energiespeicheranlage,
- Übermitteln der nicht für die ortsgebundenen Regel- und Systemaufgaben benötigten Kapazitäten und Leistungen der lokalen Energiespeicheranlage durch die lokale Steuereinheit über ein angeschlossenes Kommunikationsnetzwerk zu einer ebenfalls an das Kommunikationsnetzwerk angeschlossenen zentralen Steuereinheit, und
- Steuern der jeweiligen lokalen Energiespeicheranlage zur Aufnahme und Abgabe von Energie für nicht ortsgebundene Regel- und Systemaufgaben in ein ebenfalls an die lokale Energiespeicheranlage angeschlossenes nicht lokales Stromnetz mittels der zentralen Steuereinheit über das Kommunikationsnetzwerk im Rahmen der Anteile aller an die zentrale Steuereinheit übermittelten nicht für die ortsgebundenen Regel- und Systemaufgaben benötigten Kapazitäten und Leistungen der Energiespeicheranlage.

Die für die ortsgebundenen Regel- und Systemaufgaben benötigten und nicht benötigten Kapazitäten und Leistungen können dabei im Rahmen der Betriebsdaten an die zentrale Steuereinheit übermittelt werden. In einer Ausführungsform erfolgt das Steuern der lokalen Energiespeicheranlage durch die zentrale Steuereinheit nicht direkt, sondern mittels der über das Kommunikationsnetzwerk übermittelten und in einem Aufgabenspeicher gespeicherten nicht ortsgebundenen Regel- und Systemaufgaben, die von den jeweiligen lokalen Steuereinheit ausgelesen und nach Möglichkeit ausgeführt werden. In einer anderen Ausführungsform kann die zentrale Steuereinheit auch direkt Anweisungen für nicht ortsgebundene Regel- und Systemaufgaben an die jeweiligen lokalen Steuereinheiten übermitteln, die die jeweilige lokale Steuereinheit ausführt (sofern von den Kapazitäten und Leistungen her möglich).

In einer Ausführungsform umfasst das Verfahren die weiteren Schritte:
- Messung ein oder mehrerer relevanter Daten im jeweiligen an die lokale Energiespeicheranlage angeschlossenen Stromnetz durch ein oder mehrere Messeinheiten der lokalen Energiespeicheranlage und
- Steuerung der lokalen Energiespeicheranlage in diesem Stromnetz durch die Steuereinheit auf Basis der gemessenen relevanten Daten.

In einer weiteren Ausführungsform umfasst das Verfahren die weiteren Schritte:
- Konfigurieren und/oder Aktualisieren zumindest der nicht ortsgebundenen Regel- oder Systemaufgaben für das nicht lokale Stromnetz in einem Aufgabenspeicher der lokalen Energiespeicheranlage, der zusätzlich dazu die ortsgebundenen Regel- und Systemaufgaben umfasst,
- Zugreifen der lokalen Steuereinheit auf den Aufgabenspeicher zur Steuerung des lokalen Energiespeichers,
- vorrangiges Steuern der Energiespeicheranlage für ortsgebundene Regel- und Systemaufgaben durch die lokale Steuereinheit gemäß Aufgabenspeicher im Normalbetrieb und
- ausschließliche Durchführung der ortsgebundenen Regel- und Systemaufgaben für das oder die jeweiligen lokalen Stromnetze bei Ausfall des Kommunikationsnetzwerkes und/oder der zentralen Steuereinheit.

Der Begriff Normalbetrieb bezeichnet hier den Betrieb der lokalen Energiespeicheranlage bei vorhandenem nicht lokalem Stromnetz, das weitgehend ungestört ist.

In einer weiteren Ausführungsform umfasst das Verfahren die weiteren Schritte
- Empfangen von externen Daten für eine übergeordnete Steuerung des Energiespeichersystems durch die zentrale Steuereinheit mittels ein oder mehrerer Schnittstellen zu externen Systemen für eine übergeordnete Steuerung und
- Bilden eines Regelverbunds für das nicht lokale Stromnetz durch Bestimmen einzelner oder einer Anzahl an lokalen Energiespeicheranlagen anhand dieser externen Daten bevorzugt vor anderen Energiespeicheranlagen für die vorrangigen nicht ortsgebundenen Regel- oder Systemaufgaben im nicht lokalen Stromnetz.

Die Bestimmung einzelner lokaler Energiespeicheranlagen für einen Regelverbund kann beispielsweise aufgrund ihrer jeweiligen Betriebsdaten und des vorliegenden Bedarfs im nicht lokalen Stromnetz erfolgen. Manche lokale Energiespeicheranlagen können dabei aufgrund ihrer momentanen oder generellen Betriebsdaten für einen Regelverbund ausfallen, beispielsweise zu geringe Kapazität oder nicht vorhandene Schwarzstartfähigkeit. Vorrangige nicht ortsgebundene Regel- und Systemaufgaben sind beispielsweise die Bereitstellung größerer Mengen an Energie für das nicht lokale Stromnetz in einer begrenzten Region im nicht lokalen Stromnetz aufgrund eines sich an das nicht lokale Stromnetz anschaltenden großen Verbrauchers. Ein anderes Beispiel für vorrangige nicht ortsgebundene Regel- und Systemaufgaben wäre ein Regelverbund für eine Schwarzstartunterstützung.

In einer weiteren Ausführungsform umfasst das Verfahren die weiteren Schritte
- Bilden eines regionalen Verbunds durch Bestimmen einzelner oder einer Anzahl an lokalen Energiespeicheranlagen durch die zentrale Steuereinheit anhand von lokalen oder regionalen Einflussdaten und
- Übermitteln zusätzlicher oder veränderter vorrangiger lokaler oder regionaler Regelaufgaben an die bestimmten Energiespeicheranlagen im regionalen Verbund.

Die Bestimmung einzelner lokaler Energiespeicheranlagen für einen regionalen Verbund kann beispielsweise aufgrund ihrer jeweiligen Betriebsdaten und des vorliegenden Bedarfs in einem oder mehreren lokalen Stromnetzen erfolgen. Manche lokale Energiespeicheranlagen können dabei aufgrund ihrer momentanen oder generellen Betriebsdaten für einen regionalen Verbund ausfallen, beispielsweise zu geringe Kapazität oder nicht günstige geographische Position. Die zusätzlichen oder veränderten vorrangigen Regel- und Systemaufgaben können dabei in den Arbeitsspeicher so gespeichert werden, dass diese Aufgaben an die vorher abgespeicherten Aufgaben angehängt und entsprechend mit Vorrang indiziert werden, beispielsweise durch Setzen einer entsprechenden Markierung in den Datensätzen. Hierbei bleibt die Aufgabenhistorie für Protokollzwecke weiterhin erhalten. Alternativ können auch unterrangige Aufgaben überschrieben werden, da ihre Anwendbarkeit mit dem Vorrang anderer Aufgaben entfällt. Hierbei kann Speicherplatz gespart werden.

In einer weiteren Ausführungsform umfasst das Verfahren den weiteren Schritt
- Bestimmen der lokalen Energiespeicheranlagen durch die zentrale Steuereinheit, die für eine Schwarzstartunterstützung bereitstehen, wobei die Schwarzstartunterstützung Vorrang vor den ortsgebundenen Regel- und Systemaufgaben für das oder die jeweilig angeschlossenen lokalen Stromnetze hat.

In einer weiteren Ausführungsform umfasst das Verfahren die weiteren Schritte
- Bilden eines Regelverbunds und/oder eines regionalen Verbunds aus den von der zentralen Steuereinheit bestimmten Energiespeicheranlagen, wobei die Steuereinheiten der Energiespeicheranlagen des Regelverbunds und/oder des regionalen Verbunds dazu ausgestaltet sind, über das Kommunikationsnetzwerk zur Erfüllung nicht lokaler Regel- und Systemaufgaben und/oder regionale Regel- und Systemaufgaben mit der zentralen Steuereinheit aber ggf. auch direkt miteinander zu kommunizieren und
- zumindest zeitweise Übertragung der Aufgabe zur Steuerung des Regelverbunds und/oder des regionalen Verbunds von der zentralen Steuereinheit an eine von der zentralen Steuereinheit zuvor bestimmten lokalen Steuereinheit im Regelverbund und/oder im regionalen Verbund.

In einer weiteren Ausführungsform umfasst das Verfahren die weiteren Schritte
- Übermitteln einer Hierarchie der lokalen Steuereinheiten im Regelverbund und/oder im regionalen Verbund zusammen mit der Übertragung der Aufgabe zur Steuerung durch die zentrale Steuereinheit an die lokalen Steuereinheiten des Regelverbunds und/oder des regionalen Verbunds und
- Übernehmen der Steuerung des Regelverbunds und/oder des regionalen Verbunds durch die in der Hierarchie folgende lokale Steuereinheit bei Ausfall der mit der Steuerung beauftragten Steuereinheit oder der entsprechenden lokalen Energiespeicheranlage.

### Kurze Beschreibung der Abbildungen

Diese und andere Aspekte der Erfindung werden im Detail in den Abbildungen wie folgt gezeigt.
- Fig.1:: ein Ausführungsbeispiel für das erfindungsgemäße Energiespeichersystem;
- Fig.2:: ein Ausführungsbeispiel für eine lokale Energiespeicheranlage im erfindungsgemäßen Energiespeichersystem;
- Fig.3:: ein Ausführungsbeispiel für die zentrale Steuereinheit im erfindungsgemäßen Energiespeichersystem;
- Fig.4:: ein Ausführungsbeispiel eines Verfahrens zum Betreiben des erfindungsgemäßen Energiespeichersystems;
- Fig.5:: ein Ausführungsbeispiel für das erfindungsgemäße Verfahren im Falle einer gestörten Kommunikation zur zentralen Steuereinheit;
- Fig.6:: ein Ausführungsbeispiel eines Regelverbunds oder regionalen Verbunds im erfindungsgemäßen Energiespeichersystem;
- Fig.7:: ein Ausführungsbeispiel für das erfindungsgemäße Verfahren im Falle eines Ausfalls des nicht lokalen Stromnetzes.
- Fig.8:: ein Ausführungsbeispiel der Regeleinheit mit einer Regelbox.

### Detaillierte Beschreibung der Ausführungsbeispiele

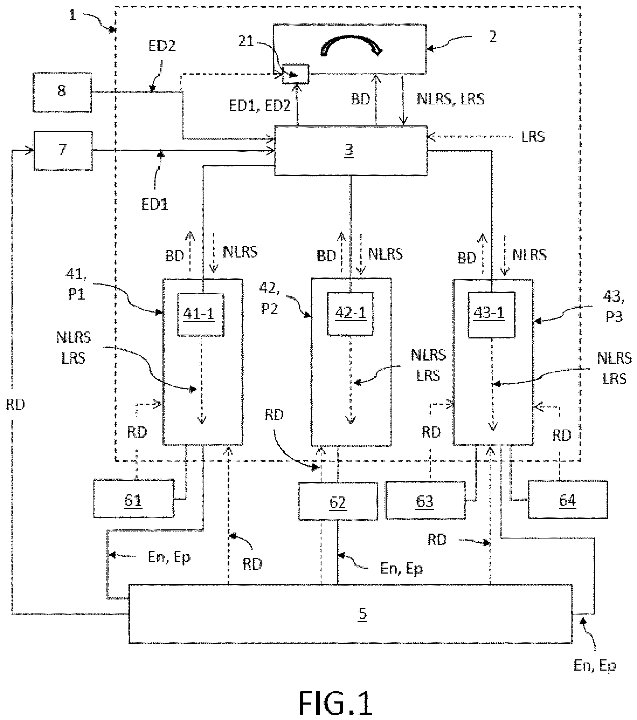

Fig. 1 zeigt ein Ausführungsbeispiel für das erfindungsgemäße Energiespeichersystem 1. Das Energiespeichersystem 1 umfasst hier beispielhaft drei lokale Energiespeicheranlagen 41, 42, 43, die an räumlich (geographisch) unterschiedlichen Positionen (Orten) P1, P2, P3 angeordnet sind und mit einer jeweiligen lokalen Speicherkapazität LSK und lokaler Leistung LL zur Aufnahme En und/oder Abgabe Ep von Energie an die Stromnetze 5, 61, 62, 63, 64 jeweils angeschlossen sind. In anderen Ausführungsformen kann das Energiespeichersystem 1 auch eine wesentlich größere Vielzahl an lokalen Energiespeicheranlagen umfassen. In einer anderen Ausführungsform kann das Energiespeichersystem 1 aber auch nur eine einzige lokale Energiespeicheranlage umfassen. In der gezeigten Ausführungsform sind die drei lokalen Energiespeicheranlagen 41, 42, 43 an das nicht lokale Stromnetz 5 und jeweils an ein oder mehrere lokale Stromnetze 61, 62, 63, 64 angeschlossen. Die lokalen Energiespeicheranlage 41 ist dabei parallel zum Anschluss an das nicht lokale Stromnetz 5 an ein lokales Stromnetz 61 angeschlossen. Die lokale Energiespeicheranlage 42 ist dabei nur an das lokale Stromnetz 62 angeschlossen, das aber ein Teil des nicht lokalen Stromnetzes 5 ist und insofern mit dem nicht lokalen Stromnetz 5 verbunden ist. Das nicht lokale Stromnetz 5 kann somit entweder direkt (separater Anschluss) an die Energiespeicheranlage 41, 43 oder wie bei der Energiespeicheranlage 42 indirekt über das lokale Stromnetz 62 angeschlossen sein. Auch die Energiespeicheranlage 42 kann damit die ortsgebundenen Regel- und Systemaufgaben LRS im lokalen Stromnetz 62 und die nicht ortsgebundenen Regel- und Systemaufgaben NLRS über das lokalen Stromnetz 62 im nicht lokalen Stromnetz 5 ausführen. Die lokale Energiespeicheranlage 43 am Ort P3 ist dabei separat an das nicht lokale Stromnetz 5 und an zwei separate lokale Stromnetze 63 und 64 angeschlossen. Die drei Energiespeicheranlagen 41, 42, 43 umfassen jeweils mindestens eine lokale Steuereinheit 41-1, 42-1, 43-1, die zumindest die Steuerung der jeweiligen Energiespeicheranlage 41, 42, 43 für ortsgebundene Regel- und Systemaufgaben LRS für die jeweiligen lokalen Stromnetze 61, 62, 63, 64 übernimmt. Ist die Energiespeicheranlage 41, 42, 43 dagegen mit mehreren Energiespeichermodulen ausgerüstet, kann die jeweilige Energiespeicheranlage 41, 42, 43 auch eine lokale Steuereinheit pro Modul besitzen. Das Energiespeichersystem 1 umfasst des Weiteren ein Kommunikationsnetzwerk 3, das die jeweiligen lokalen Steuereinheiten 41-1, 42-1, 43-1 mit einer zentralen Steuereinheit 2 und gegebenenfalls untereinander verbindet. Die zentrale Steuereinheit 2 übernimmt dabei zumindest die Steuerung SNL der Aufnahme En und Abgabe Ep von Energie der jeweiligen lokalen Energiespeicheranlagen 41, 42, 43 an das nicht lokale Stromnetz 5. Die Steuerungsübernahme kann dabei direkt über Anweisungen an die lokalen Steuereinheiten 41-1, 42-1, 43-1 zur nachfolgenden Ausführung durch diese erfolgen oder indirekt über eine Übermittlung der nicht ortsgebundenen Regel- und Systemaufgaben NLRS an die jeweiligen Steuereinheiten, 41-1, 42-1, 43-1, die dann die nicht ortsgebundenen Regel- und Systemaufgaben NLRS zusammen mit den jeweiligen ortsgebundenen Regel- und Systemaufgaben LRS gemäß der gesetzten Prioritäten ausführt. Die zentrale Steuereinheit 2 kann aber auch die Steuerung SL der Aufnahme En und Abgabe Ep von Energie der jeweiligen lokalen Energiespeicheranlagen 41, 42, 43 an das lokale Stromnetz 61, 52, 53, 64 übernehmen. Die Steuerungsübernahme kann dabei direkt über Anweisungen an die lokalen Steuereinheiten 41-1, 42-1, 43-1 zur nachfolgenden Ausführung durch diese erfolgen oder indirekt über eine Übermittlung der ortsgebundenen Regel- und Systemaufgaben LRS an die jeweiligen Steuereinheiten, 41-1, 42-1, 43-1, die dann die ortsgebundenen Regel- und Systemaufgaben LRS gemäß der gesetzten Prioritäten ausführt. Die Prioritäten können dabei für den Normalbetrieb NB grundsätzlich gesetzt und in den lokalen Steuereinheiten 41-1, 42-1, 43-1 oder in einem dafür vorgesehenen Speicher in den jeweiligen Energiespeicheranlagen 41, 42, 43 gespeichert werden. Alternativ können die ortsgebundenen Regel- und Systemaufgaben auch von einer anderen Quelle (gestrichelter Pfeil, nicht im Detail dargestellt) her über das Kommunikationsnetzwerk 3 an die lokalen Energiespeicheranlagen 41, 42, 43 übermittelt werden. Für besondere Zustände im nicht lokalen Stromnetz 5 können diese Prioritäten von der zentralen Steuereinheit 2 aber auch geändert oder überstimmt werden. In diesem Ausführungsbeispiel ist die zentrale Steuereinheit 2 dazu ausgestattet, über alle Anteile der lokalen Speicherkapazitäten der drei lokalen Energiespeicheranlagen 41, 42, 43 für nicht ortsgebundene Regel- und Systemaufgaben NLRS im nicht lokalen Stromnetz 5 zu verfügen, die von den jeweiligen lokalen Steuereinheiten 41-1, 42-1, 43-1 für die ortsgebundenen Regel- und Systemaufgaben LRS nicht benötigt werden. Diese nicht benötigten Kapazitäten (freie nicht lokale Kapazitäten) werden der zentralen Steuereinheit als Betriebsdaten BD über das Kommunikationsnetzwerk 3 zu der zentralen Steuereinheit 2 übermittelt. Die Betriebsdaten BD können neben den freien nicht lokalen Kapazitäten auch andere Daten wie beispielsweise Anlagenzustand oder Systemzustand der angeschlossenen Netze (6 oder 5) oder externe Messdaten umfassen. Zur Erfüllung der ortsgebundenen Regel- und Systemaufgaben LRS bekommen die lokalen Energiespeicheranlagen 41, 42, 43 relevante Daten RD aus den jeweiligen angeschlossenen lokalen Stromnetzen 61, 62, 63, 64 übermittelt, auf deren Basis die lokalen Steuereinheiten 41-1, 42-1, 43-1 die Steuerung der lokalen Energiespeicheranlage 41, 42, 43 für die ortsgebundenen Regel- und Systemaufgaben LRS in diesen lokalen Stromnetzen 61, 62, 63, 64 ausführen. Ebenso werden relevante Daten aus dem nicht-lokalen Stromnetz 5 gemessen, auf deren Basis die lokalen Steuereinheiten 41-1, 42-1, 43-1 die Steuerung SG der lokalen Energiespeicheranlage 41, 42, 43 für die nicht ortsgebundenen Regel- und Systemaufgaben NLRS im nicht lokalen Stromnetz 5 ausführen. Hierbei könnte beispielsweise die Netzfrequenz als relevante Daten RD aus dem nicht lokalen Stromnetz 5 direkt an die lokalen Steuereinheiten 41-1, 42-1, 43-1 übergeben werden, um festgelegte nicht ortsgebundene Regel- und Systemaufgaben NLRS wie beispielsweise die Bereitstellung von Primärregelleistung ausführen zu können. Gegebenenfalls werden ortsgebundene Regel- und Systemaufgaben LRS auch einzeln oder für einen regionalen Verbund von der zentralen Steuereinheit disponiert und an die lokalen Steuereinheiten übergeben. Für die Ausführung der nicht ortsgebundenen Regel- und Steueraufgaben NLRS empfängt die zentrale Steuereinheit 2 über entsprechende Schnittstellen 21 von ein oder mehreren externen Systemen 7 externen Daten ED1 für eine übergeordnete Steuerung des Energiespeichersystems 1. Die externen Daten ED1 können beispielsweise von einer übergeordneten Steuerung eines Netzverbundes aus mehreren nicht lokalen Stromnetzen als externes System 7 stammen und allgemeine Regelaufgaben enthalten, die von dem erfindungsgemäßen Energiespeichersystem 1 im angeschlossenen nicht lokalen Stromnetz 5 entsprechend umgesetzt werden. Das externe System kann dazu beispielsweise relevante Daten RD im nicht lokalen Stromnetz 5 erheben. Die zentrale Steuereinheit 2 empfängt die externen Daten ED1 über die Schnittstelle 21 und erstellt automatisch in Reaktion auf den Empfang mittels eines in der zentralen Steuereinheit 2 hinterlegten Betriebsmodells die entsprechenden nicht ortsgebundenen Regel- und Systemaufgaben NLRS für die lokalen Energiespeicheranlagen 41, 42, 43 im Energiespeichersystem 1. Die zentrale Steuereinheit 2 ist in diesem Ausführungsbeispiel außerdem dazu vorgesehen, anhand von lokalen oder regionalen Einflussdaten ED2, wie beispielsweise lokale Umweltdaten wie Windstärke, Sonneneinstrahlung, Sonnenscheindauer und Temperatur, die beispielsweise von einem Umweltdaten-Messsystem 8 übermittelt werden, den lokalen Energiespeicheranlagen 41, 42, 43 nicht ortsgebundene Regel- und Systemaufgaben NLRS oder zusätzliche oder veränderte vorrangige ortsgebundene Regel- und Systemaufgaben V-LRS zu übermitteln. Die Einflussdaten ED2 können über das Kommunikationsnetzwerk 3 oder direkt (gestrichelter Pfeil) an die zentrale Steuereinheit 2 übermittelt werden. Diese nicht ortsgebundenen Regel- und Systemaufgaben NLRS, die auf den Einflussdaten ED2 basieren, werden analog zu dem vorstehend beschriebenen Verfahren ebenfalls automatisch in Reaktion auf das Erhalten der Einflussdaten ED2 über die Schnittstelle 21 mit einem entsprechenden Betriebsmodell erstellt. Die lokalen Steuereinheiten 41-1, 42-1,
43-1 sind dabei vorzugsweise dazu ausgestaltet, den ortsgebundenen Regel- und Systemaufgaben LRS zur Steuerung der jeweiligen Energiespeicheranlage 41, 42, 43 Vorrang vor den nicht ortsgebundenen Regel- und Systemaufgaben NLRS im nicht lokalen Stromnetz 5 zu geben.

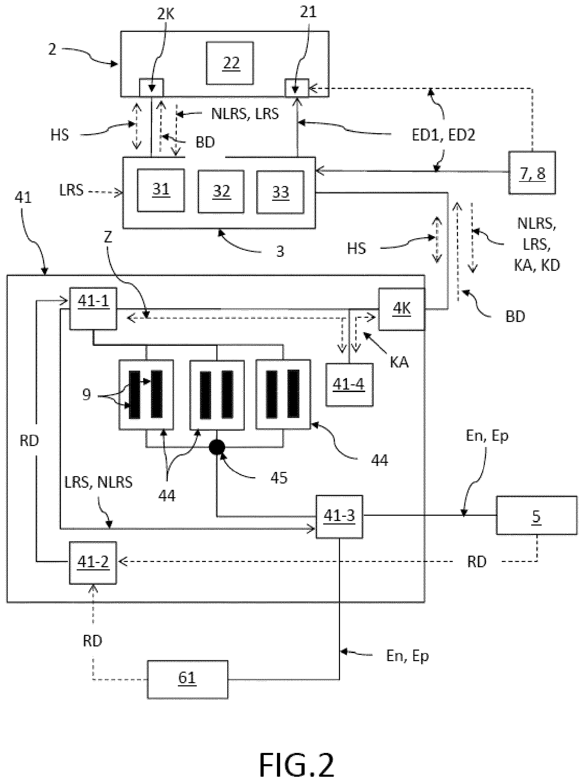

Fig.2 zeigt ein Ausführungsbeispiel für eine lokale Energiespeicheranlage 41 im erfindungsgemäßen Energiespeichersystem 1. Die generellen Gegebenheiten im Energiespeichersystem 1 sind bereits für Figur 1 beschrieben. Die lokale Energiespeicheranlage 41 umfasst drei Energiespeichermodule 44, die jeweils in dieser Ausführungsform als kinematische Energiespeicher zwei Schwungradenergiespeicher 9 zur Aufnahme En von Energie aus den angeschlossenen Stromnetzen 5, 61 und zur Abgabe Ep von Energie an die angeschlossenen Stromnetze 5, 61 umfasst. Das hier gezeigte Ausführungsbeispiel ist exemplarisch zu verstehen. Die Anzahl der Energiespeichermodule 44 pro lokale Energiespeicheranlage 41 hängt von der jeweiligen gewünschten Anwendung ab und kann daher zwischen verschiedenen Energiespeicheranlagen 41, 42, 43 stark variieren. Es können auch Energiespeicheranlagen 41, 42, 43 mit nur einem einzigen Energiespeichermodul 44 verwendet werden. Ebenfalls skalierbar ist die Zahl der Energiespeichereinheiten 9 (beispielsweise Schwungsradenergiespeicher 9) pro Modul. Das oder die Energiespeichermodule 44 sind über einen gemeinsamen Aufschaltpunkt 45 verbunden, so dass deren gesamte Speicherkapazität LKS und Leistung LL zur Steuerung der angeschlossenen Stromnetze 5, 61 genutzt werden kann. Die einzelnen Energiespeichermodule 44 werden in diesem Ausführungsbeispiel gemeinsam von der lokalen Steuereinheit 41-1 gesteuert. Die Steuerung besteht darin, dass die lokale Steuereinheit 41-1 den einzelnen Modulen und/oder den einzelnen Schwungsradenergiespeichern 9 vorschreibt, wie viel Energie aus den Schwungrädern mittels Abbremsung abgegeben oder in die einzelnen Schwungräder mittels Beschleunigung aufgenommen werden soll. Damit diese Energieaufnahme oder Abgabe wie gewünscht durchgeführt werden kann, steuert die lokale Steuereinheit 41-1 die Antriebsmotoren der Schwungradenergiespeicher 9 zur Abbremsung oder Beschleunigung der einzelnen Schwungradenergiespeicher 9. Ebenfalls kann die Anzahl der Schwungradenergiespeicher 9 in einem Energiespeichermodul 44 von Modul zu Modul und von Energiespeicheranlage zu Energiespeicheranlage variieren. Vorteilhaft ist eine hohe Anzahl an Schwungradenergiespeichern 9 pro Energiespeichermodul 44, damit die lokale Speicherkapazität LKS der Energiespeicheranlage 41, 42, 43 vergrößert wird. Die lokale Energiespeicheranlage 41 umfasst ein oder mehrere Messeinheiten 41-2 zur Messung ein oder mehrerer relevanter Daten RD in dem angeschlossenen lokalen Stromnetz 61 und/oder im dem nicht lokalem Stromnetz 5. Aufgrund der so gemessenen und in der lokalen Energiespeichereinheit 41 damit verfügbaren relevanten Daten RD kann die lokale Steuereinheit 41-1 nach Auswertung der relevanten Daten RD und Vergleich mit den vorgesehenen ortsgebundenen und nicht ortsgebundenen Regel- und Systemaufgaben LRS, NLRS die Steuerung der lokalen Energiespeicheranlage 41 für die ortsgebundenen Regel- und Systemaufgaben LRS in diesem lokalen Stromnetz 61 zielgerichtet und flexibel zur Steuerung der Netzqualität ausführen und die nicht ortsgebundenen Regel- und Systemaufgaben NLRS im nicht lokalen Stromnetz 5 wie beispielsweise die Bereitstellung von Regelleistung ebenfalls zielgerichtet und flexibel ausführen. Die lokale Energiespeicheranlage 41 ist dabei über eine Regeleinheit 41-3 an das lokale Stromnetz 61 und an das nicht lokale Stromnetz 5 angeschlossen, wobei die Regeleinheit 41-3 den Energiefluss zwischen den angeschlossenen Stromnetzen 5, 61 und der Energiespeicheranlage 41 so regelt, dass die durch die lokale Steuereinheit 41-1 auszuführenden Regel- und Systemaufgaben RS (beispielsweise nicht ortsgebundene und/oder ortsgebundene Regel- und Systemaufgaben) und die in deren Folge vorgesehenen Energieflüsse die nicht lokalen und lokalen Stromnetze 5, 61 wie von der lokalen Steuereinheit 41-1 angewiesen erreichen. Die Regeleinheit 41-3 ist außerdem dazu vorgesehen, ein oder mehrere der angeschlossenen Stromnetze 5, 61 im Bedarfsfall von der lokalen Energiespeicheranlage 41 zu trennen, beispielsweise bei einem Netzausfall. Für die Durchführung von ortsgebundenen und nicht ortsgebundenen Regel- und Systemaufgaben LRS, NLRS umfasst die lokale Energiespeicheranlage 41 einen Aufgabenspeicher 41-4, der die von der zentralen Steuereinheit 2 übermittelten nicht ortsgebundenen Regel- und Systemaufgaben NLRS und/oder ortsgebundenen Regel- und Systemaufgaben LRS speichert. Die ortsgebundenen Regel- und Systemaufgaben LRS können aber auch von anderen Quellen der Energiespeicheranlage 41 übermittelt werden, die entsprechend im Aufgabenspeicher 41-4 gespeichert werden. Die ortsgebundenen und nicht ortsgebundenen Regel- oder Systemaufgaben LRS, NLRS können von der zentralen Steuereinheit 2 im Aufgabenspeicher 41-4 konfiguriert und/oder aktualisiert KA werden. Dazu ist die zentrale Steuereinheit 2 mit dem Kommunikationsnetzwerk 3 über eine Schnittstelle 2K und das Kommunikationsnetzwerk 3 anschließend über eine Schnittstelle 4K mit dem Aufgabenspeicher 41-4 der Energiespeicheranlage 41 verbunden. Die Übermittlung der Konfiguration oder Aktualisierung erfolgt in Form von übermittelten Konfigurationsdaten KD für die jeweiligen Anlagenfunktionen. Die Konfiguration oder Aktualisierung KA der ortsgebundenen und nicht ortsgebundenen Regel- und Systemaufgaben LRS, NLRS im Aufgabenspeicher 41-4 kann beispielsweise auf Basis von externen Daten ED1 oder Einflussdaten ED2 erfolgen, die die zentrale Steuereinheit 2 über die Schnittstelle 21 indirekt über das Kommunikationsnetzwerk 3 oder direkt von externen Systemen 7 oder Messsystemen 8 empfangen und in einem Speicher 22 zur Analyse und Aufstellung der darauf basierenden ortsgebundenen und nicht ortsgebundenen Regel- und Systemaufgaben LRS, NLRS gespeichert hat. Die lokale Steuereinheit 41-1 greift Z zur Steuerung des lokalen Energiespeichers 41 auf den Aufgabenspeicher 41-4 zu, beispielsweise in periodischen Abständen (beispielsweise im Bereich von Millisekunden) oder automatisch nach jeder Konfiguration oder Aktualisierung KA durch die zentrale Steuereinheit 2 als Reaktion auf die erfolgte Konfiguration oder Aktualisierung KA. Das Kommunikationsnetzwerk 3 umfasst in dieser Ausführungsform drei Sub-Kommunikationsnetze 31, 32, 33, beispielsweise ausgeführt als kabel-, funk- und stromgebundene Sub-Kommunikationsnetze 31, 32, 33. Die lokale Steuereinheit 41-1 oder die zentrale Steuereinheit 2 prüfen die bestehende Verbindung über das Kommunikationsnetz zueinander periodisch mittels eines so genannten digitalen Handschlag HS, bei dem die eine Seite ein Datenpaket absendet, das nach Empfang auf der anderen Seite entsprechend charakteristisch beantwortet wird. Nach Erhalt der Antwort ist für die absendende Seite das Bestehen der Kommunikationsverbindung positiv überprüft. Hier kann der digitale Handschlag HS entweder von der lokalen Steuereinheit 41-1 oder von der zentralen Steuereinheit 2 oder jeweils von beiden Steuereinheiten 2, 41-1 initiiert (ausgesendet) werden. Der digitale Handschlag HS wird entsprechend bei Vorhandensein weiterer lokaler Energiespeicheranlagen entsprechend auch zwischen diesen beziehungsweise deren lokalen Steuereinheiten und der zentralen Steuereinheit durchgeführt. Die lokale Steuereinheit 41-1 und die zentrale Steuereinheit 2 sind dazu ausgestaltet, im Falle einer unterbrochenen Verbindung entlang eines der Sub-Kommunikationsnetze 31, 32, 33 diese Verbindung über ein im Kommunikationsnetzwerk 3 vorhandenes alternatives Sub-Kommunikationsnetz 31, 32, 33 wieder herzustellen.

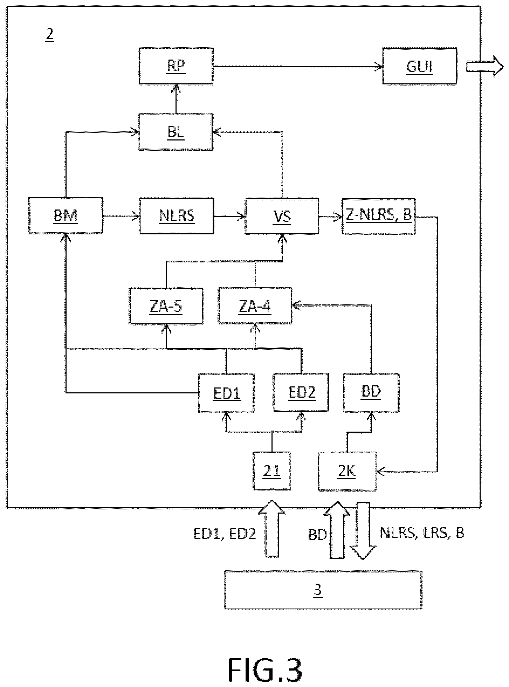

Fig.3 zeigt ein Ausführungsbeispiel für eine zentrale Steuereinheit 2 im erfindungsgemäßen Energiespeichersystem. Über die Schnittstellen 21, 2K angeschlossen an das Kommunikationsnetzwerk 3 werden Betriebsdaten BD wie beispielsweise die freie nicht lokale Kapazität LSKg und freie nicht lokalen Leistung LLg der einzelnen Energiespeicheranlagen 41, 42, 43, externe Daten ED1 und Einflussdaten ED2 empfangen. Die Betriebsdaten werden in einem Zustandsaufnahmemodul ZA-4 für die lokalen Energiespeicheranlagen 41, 42, 43 gespeichert und ausgewertet, beispielsweise nach der gesamten für nicht ortsgebundene Regel- und Systemaufgaben NLRS zur Verfügung stehenden freien nicht lokalen Kapazitäten LSKg und freien nicht lokalen Leistungen LLg aller lokalen Energiespeicheranlagen 41, 42, 43. Gleichzeitig werden in dem Zustandsaufnahmemodul ZA-5 der zeitliche und örtliche Bedarf an Regel- und Systemaufgaben für das nicht lokale Stromnetz 5 aus den externen Daten ED1 und Einflussdaten ED2 bestimmt, die im Zustandsaufnahmemodul ZA-5 außerdem gespeichert werden. Aufgrund des ermittelten Regelbedarfs werden die tatsächlich benötigten Regel- und Systemaufgaben RS (bezeichnet gemeinsam die ortsgebundenen und nicht ortsgebundenen Regel- und Systemaufgaben LRS, NLRS) über das Betriebsmodell BM, das die jeweiligen Regelparameter und Regelverfahren vorgibt, als Gesamtplan erstellt und im Verteilungsteuerungsmodul VS auf die jeweiligen lokalen Energiespeicheranlagen 41, 42, 43 gemäß der erfolgten Zustandsaufnahme im Zustandsaufnahmemodul ZA-4 verteilt. Das Zuweisungsmodul Z-NLRS erstellt dann in Reaktion auf die erfolgte Aufgabenverteilung die nicht ortsgebundenen Regel- und Systemaufgaben NLRS individuell für die einzelnen lokalen Energiespeicheranlagen 41, 42, 43 als zu übertragende Datenpakete und übermittelt diese individuellen Regel- und Systemaufgaben über die Schnittstelle 2K und das Kommunikationsnetzwerk 3 zur Konfiguration oder Aktualisierung KA des jeweiligen Aufgabenspeichers 41-4 an die jeweiligen lokalen Energiespeicheranlagen 41, 42, 43. Die zentrale Steuereinheit 2 ist ferner dazu ausgestaltet, aus dem Betriebsmodell BM und der erfolgten Verteilungssteuerung im Verteilungssteuerungsmodul VS eine Auswertung der erfolgten Regelungen durchzuführen und diese Regelungen in Form eines Berichts, der im Reportmodul RP aus den in der zentralen Steuereinheit 2 verfügbaren Daten erstellt wird, auf einer graphischen Benutzeroberfläche GUI den Betreibern des Energiespeichersystems 2 darzustellen und der Bericht von diesen gegebenenfalls ausdrucken zu lassen.

Die vorstehend beschriebenen Module können dabei als Hardware- oder Softwaremodule ausgeführt sein. Diese Module umfassen zur Durchführung der den Modulen zugeordneten Funktionen beispielsweise einzelne Computerprogramme, die beispielsweise in den Modulen oder zusammen auf einem Server zum Zugriff durch die Module gespeichert und ausgeführt werden. Alternativ können die Module als Softwaremodule selber auf einem Server gespeichert sein.

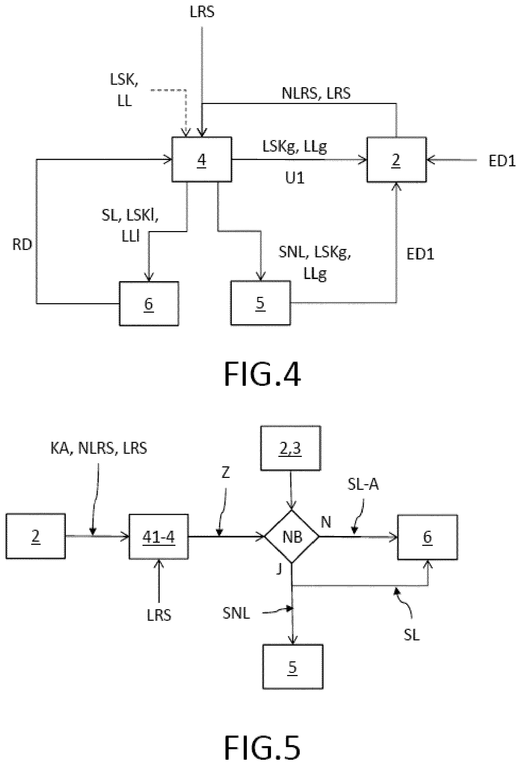

Fig.4 zeigt ein Ausführungsbeispiel eines Verfahrens zum Betreiben des erfindungsgemäßen Energiespeichersystems, das mehrere lokale Energiespeicheranlagen 4 mit jeweiligen lokalen Speicherkapazitäten LSK und lokale Leistungen LL umfassen kann. Hier ist aus Übersichtgründen das Verfahren als Beispiel für eine lokale Energiespeicheranlage 4 beschrieben, wobei das hier gezeigte Verfahren entsprechend auch für eine Vielzahl an lokalen Energiespeicheranlagen 41, 42, 43 (hier nicht im Detail gezeigt) durchgeführt werden kann. Die Energiespeicheranlage 4 ist dabei zur Aufnahme En und Abgabe Ep von Energie aus/an angeschlossene Stromnetze 5, 6 geeignet. Die lokale Energiespeicheranlage 4 mit einer lokalen Speicherkapazität LSK und einer lokalen Leistung LL erhält ortsgebundene Regel- und Systemaufgaben LRS, die einen Teil LSKI der lokalen Speicherkapazität LSK und einen Teil LLI der lokalen Leistung LL in Anspruch nehmen. Ohne nicht ortsgebundene Regel- und Systemaufgaben würde die lokalen Energiespeicheranlage 41 gemäß der ortsgebundenen Regel- und Systemaufgaben LRS über die lokale Steuereinheit 41-1 die Abgabe oder Aufnahme von Energie an/aus dem angeschlossenen lokalen Stromnetz 6 steuern SL und diese Steuerung SL aufgrund relevanter Daten RD aus dem lokalen Stromnetz 6 bei Bedarf entsprechend anpassen. Eine solche Anpassung wäre beispielsweise die vermehrte Einspeisung von Energie Ep in das lokale Stromnetz 6 bei Absinken der Netzfrequenz im lokalen Stromnetz 6. Die nicht für die ortsgebundenen Regel- und Systemaufgaben LRS benötigten freie nicht lokale Kapazitäten LSKg und frei nicht lokalen Leistung LLg übermittelt U1 die lokale Energiespeicheranlage 41 an die zentrale Steuereinheit 2, die daraufhin der lokalen Energiespeicheranlage 4 nicht ortsgebundene Regel- und Systemaufgaben NLRS übermittelt, beispielsweise auf Basis externer Daten ED1. Die lokale Energiespeicheranlage 41 steuert SNL daraufhin die Aufnahme En und Abgabe Ep von Energie in ein ebenfalls angeschlossenes nicht lokales Stromnetz 5 gemäß der übermittelten nicht ortsgebundenen Regel- und Systemaufgaben NLRS im Rahmen der nicht für die ortsgebundenen Regel- und Systemaufgaben LRS benötigten freien nicht lokalen Speicherkapazitäten LSKg und freien nicht lokalen Leistung LLg. Das lokale Stromnetz 6 wird dagegen vorrangig im Rahmen der lokal benötigten Kapazitäten LSKI und lokal benötigten Leistung LLI zur Steigerung der lokalen Netzqualität versorgt (SL).

Fig.5 zeigt ein Ausführungsbeispiel für das erfindungsgemäße Verfahren im Falle einer gestörten Kommunikation zur zentralen Steuereinheit 2. Bei bestehender Kommunikationsverbindung über das Kommunikationsnetzwerk 3 hat die zentrale Steuereinheit 2 ortsgebundene und nicht ortsgebundene Regel- und Systemaufgaben LRS, NLRS an den Aufgabenspeicher 41-1 übermittelt und ihn damit aktualisiert KA. Ebenso befinden sich in diesem Aufgabenspeicher 41-4 bereits ortsgebundene Regel- und Systemaufgaben LRS für diese Energiespeicheranlage 41. Greift nun die lokale Steuereinheit 41-1 auf den Aufgabenspeicher 41-4 zu Z, so wird dabei auch geprüft, ob das Energiespeichersystem 1 im Normalbetrieb NB arbeitet, was eine Überprüfung der Kommunikationsverbindung zur zentralen Steuereinheit 2 beinhaltet. Ist das Ergebnis der Prüfung, dass eine Kommunikationsverbindung besteht positiv ("J"), beispielsweise durch einen durchgeführten digitalen Handschlag HS, wird die Energiespeicheranlage 41 vorrangig die ortsgebundenen Regel- und Systemaufgaben LRS für das lokalen Stromnetz 6 ausführen SL und im Rahmen der freien nicht lokalen Kapazitäten LSKg auch die nicht ortsgebundenen Regel- und Systemaufgaben erfüllen SNL. Sollte die Prüfung der Kommunikationsverbindung negativ ("N") ausfallen, werden ausschließlich die ortsgebundenen Regel- und Systemaufgaben LRS für das lokale Stromnetz 6 durchgeführt SL-A. Durch eine periodische Prüfung der Kommunikationsverbindung kann zu einem späteren Zeitpunkt die Prüfung wieder positiv ausfallen ("J"), so dass die lokalen Energiespeicheranlage 41 erneut die nicht ortsgebundenen Regel- und Systemaufgaben NLRS im Rahmen der verfügbaren Kapazitäten und Leistungen LSK, LL, LSKg, LLg, LSKI, LLI parallel ausführt.

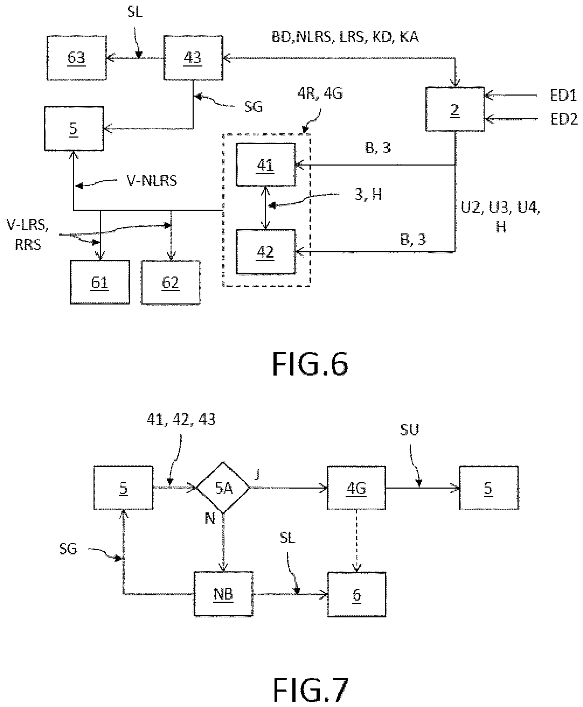

Fig.6 zeigt ein Ausführungsbeispiel eines Regelverbunds 4G oder regionalen Verbunds 4R im erfindungsgemäßen Energiespeichersystem 1. Die zentrale Steuereinheit 2 empfängt dabei externe Daten ED1 von einer übergeordneten Steuerung und bestimmt B anhand dieser externen Daten ED1 hier beispielsweise zwei lokale Energiespeicheranlagen 41, 42, die vorrangige nicht ortsgebundenen Regel- oder Systemaufgaben V-NLRS im nicht lokalen Stromnetz 5 bevorzugt gegenüber der weiteren lokalen Energiespeicheranlagen 43 ausführen sollen. Diese beiden lokalen Energiespeicheranlagen 41, 42 bilden damit einen Regelverbund 4G (gestrichelt dargestellt) für das nicht lokale Stromnetz 5. Ebenso ist die zentrale Steuereinheit 2 dazu vorgesehen, anhand von lokalen oder regionalen Einflussdaten ED2 einen regionalen Verbund 4R (ebenfalls gestrichelt dargestellt) aus den bestimmten B Energiespeicheranlagen zu bilden, hier ebenfalls am Beispiel der lokalen Energiespeicheranlagen 41, 42 dargestellt. Im regionalen Verbund 4R kann die zentrale Steuereinheit 2 den bestimmten B Energiespeicheranlagen 41, 42 auch zusätzliche oder veränderte vorrangige ortsgebundene Regel- und Systemaufgaben V-LRS als regionale Regel- und Systemaufgaben RRS zur Ausführung in den an den regionalen Verbund 4R angeschlossenen lokalen Stromnetzen 61, 62 übermitteln U2. In der hier gezeigten Ausführungsform kommunizieren die Steuereinheiten 41-1, 42-1 der Energiespeicheranlagen 41, 42 des Regelverbunds 4G und/oder des regionalen Verbunds 4R direkt über das Kommunikationsnetzwerk 3 zur Ausführung der vorrangigen nicht ortsgebundenen Regel- oder Systemaufgaben V-NLRS und/oder regionalen Regel- und Systemaufgaben RRS ohne Einbeziehung der zentralen Steuereinheit 2 miteinander. Zusätzlich kann die zentrale Steuereinheit 2 zumindest zeitweise die Aufgabe zur Steuerung SNL, SL des Regelverbunds 4G und/oder des regionalen Verbunds 4R an eine zuvor bestimmte B lokale Steuereinheit 41-1 im Regelverbund 4G und/oder im regionalen Verbund 4R übertragen U3. Außerdem kann die zentrale Steuereinheit 2 eine Hierarchie H der lokalen Steuereinheiten 41, 42 im Regelverbund 4G und/oder im regionalen Verbund 4R zusammen mit oder separat zu der Übertragung U3 der Aufgabe zur Steuerung übermitteln U4. Anhand der Hierarchie H kann bei Ausfall der mit der Steuerung beauftragten Steuereinheit 41-1 oder der entsprechenden lokalen Energiespeicheranlage 41 die in der Hierarchie H folgende lokale Steuereinheit 42-1 die Steuerung des Regelverbunds 4G und/oder des regionalen Verbunds 4R übernehmen. Diese Übernahme kann von der übernehmenden lokalen Steuereinheit 42-1 an die weiteren (hier nicht gezeigten) lokalen Steuereinheiten des Regelverbunds 4G oder des regionalen Verbunds 4R automatisch als Reaktion auf die erfolgte Übernahme oder Feststellung des Ausfalls der bisher führenden lokalen Steuereinheit 41-1 mitgeteilt werden.

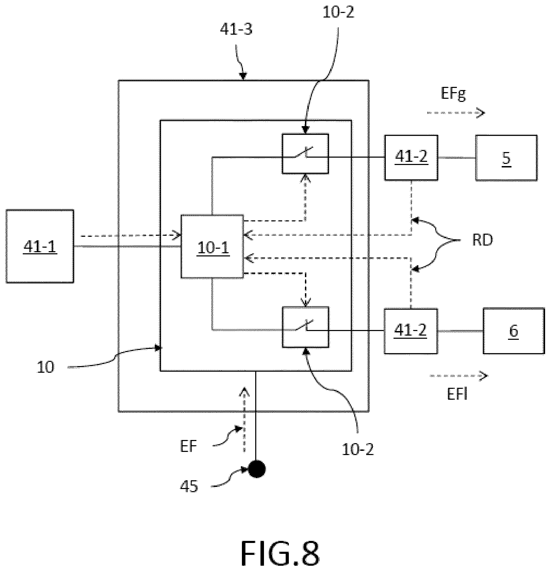

Fig.7 zeigt ein Ausführungsbeispiel für das erfindungsgemäße Verfahren im Falle eines Ausfalls des nicht lokalen Stromnetzes. In diesem Ausführungsbeispiel wurde vorab ein Regelverbund 4G durch die zentrale Steuereinheit 2 bestimmt B, der für eine Schwarzstartunterstützung SU bereitsteht, sofern das nicht lokale Stromnetz 5 ausfallen 5A sollte. Die Energiespeicheranlagen 41, 42, 43 prüfen kontinuierlich, beispielsweise über die entsprechenden Messeinheiten (siehe auch Fig. 8) und die Regeleinheiten 41-3, 42-3, 43-3, das Vorhandensein des nicht lokalen Stromnetzes 5. Wenn die Prüfung ergibt, dass das nicht lokale Stromnetz 5 vorhanden ist (5A = N), werden die lokalen Energiespeicheranlagen 41, 42, 43 im Normalbetrieb NB weiter betrieben, so dass die lokalen Energiespeicheranlagen 41, 42, 43 gemäß der Regel- und Systemaufgaben RS gesteuert SL, SNL werden. Wenn die Prüfung ergibt, dass das nicht lokale Stromnetz 5 ausgefallen ist (5A = J), erhält die Schwarzstartunterstützung SU für das nicht lokale Stromnetz 5 Vorrang vor den ortsgebundenen Regel- und Systemaufgaben LRS (dargestellt durch den gestrichelten Pfeil zum lokalen Stromnetz 6). Die lokalen Energiespeicheranlagen 41, 42, 43 im Regelverbund 4G werden nach oder mit entsprechender Synchronisation der Einspeisefrequenz gemeinsam einen Schwarzstart für das nicht lokale Stromnetz 5 durchführen. Sobald der Schwarzstart gelungen ist, werden wieder die ortsgebundenen Regel- und Systemaufgaben LRS mit Vorrang durchgeführt.

Fig.8 zeigt die Regeleinheit 41-3, die an ein lokales Stromnetz 6 und an ein nicht lokales Stromnetz 5 angeschlossen ist. Damit die Regeleinheit 41-3 den Energiefluss zwischen den angeschlossenen Stromnetzen 5, 6 und der Energiespeicheranlage 41 regeln und im Bedarfsfall ein oder mehrere der angeschlossenen Stromnetze, hier das lokale Stromnetz 6 und/oder das nicht lokale Stromnetz, von der lokalen Energiespeicheranlage 41, 42, 43 trennen kann, umfasst die Regeleinheit 41-3 eine Regelbox 10 mit einem Regelglied 10-1 und separate Trennschalter 10-2 für jedes der angeschlossenen Stromnetze 5, 6. Die lokale Steuereinheit 41-1 ist über eine Datenverbindung mit dem Regelglied 10-1 der Regelbox 10 verbunden und übermittelt der Regelbox 10, hier direkt dem Regelglied 10-1, zur Steuerung der Energieflüsse entsprechende Konfigurationsdaten der Reglerfunktion KD-R. Aufgrund der Konfigurationsdaten der Reglerfunktion KD-R steuert das Regelglied 10-1 die Verteilung des vom Aufschaltpunkt 45 eingehenden Energieflusses EF auf die angeschlossenen Stromnetze 5, 6 als Energiefluss EFI für das lokale Stromnetz 6 und als Energiefluss EFg für das nicht lokale Stromnetz 5. In diesem Ausführungsbeispiel ist lediglich exemplarisch die Verteilung der Energieflüsse bei Einspeisung von Energie in beide angeschlossene Stromnetze 5, 6 gezeigt. Die Regelbox 10 ist gleichermaßen dafür ausgestaltet, einen Energiefluss aus einem der angeschlossenen Stromnetze 5, 6 und einen Energiefluss in das andere angeschlossene Stromnetz 6, 5 zu steuern, wobei je nach Größe der beiden Energieflüsse entweder der negative Energieüberschuss von der Energiespeicheranlage 41 gespeichert oder der positive Energieüberschuss von der Energiespeicheranlage 41 bereitgestellt wird. Die Energiespeicheranlage 41 ist hier nicht explizit gezeigt, sondern nur symbolisch über die entsprechenden Komponenten 41-1, 41-2, 41-3 dargestellt. Die Regelbox 10 empfängt von entsprechenden Messeinheiten 41-2 simultan die relevanten Daten RD aus beiden angeschlossenen Stromnetzen 5, 6, woraus das Regelglied 10-1 das Vorhandensein der beiden angeschlossenen Stromnetze 5, 6 mittels in dem Regelglied 10-1 hinterlegten Kriterien oder Schwellwerte für die relevanten Daten RD ableitet. Sollte eines oder beide der angeschlossenen Stromnetze 5, 6 aufgrund eines Netzausfalls nicht mehr zur Verfügung stehen, so manifestiert sich der Ausfall des jeweiligen Stromnetzes 5, 6 in den entsprechenden, an das Regelglied 10-1 übermittelten relevanten Daten RD, woraufhin das Regelglied 10-1 automatisch entsprechende Trenn-Anweisungen (gestrichelter Pfeil) an den oder die betreffenden Trennschalter 10-2 zur Trennung der Energiespeicheranlage 41 von dem oder den angeschlossenen Stromnetzen 5, 6 aussendet, woraufhin der oder die Trennschalter 10-2 das oder die vormals angeschlossenen Stromnetze 5, 6 von der Energiespeicheranlage 41 trennen. Die Trennung des angeschlossenen Stromnetzes erfolgt dabei innerhalb weniger Millisekunden. Bei der Trennung von nur einem Stromnetz bleibt die Energiespeicheranlage 41 weiterhin für die anderen noch weiterhin angeschlossenen Stromnetze betriebsbereit. Damit kann bei Ausfall eines Stromnetzes ein Kurzschluss oder eine Überlastsituation effektiv verhindert werden. Das hier gezeigte Ausführungsbeispiel mit einem angeschlossenen lokalen Stromnetz 6 und einem angeschlossenen nicht lokalen Stromnetz 5 ist nur ein Bespiel für zwei angeschlossene Stromnetze. Die Regeleinheit 41-3, insbesondere die Regelbox 10, kann in anderen Ausführungsformen auch an mehr als zwei Stromnetze angeschlossen sein. Die zwei oder mehr angeschlossenen Stromnetze können auch jeweils lokale Stromnetze sein, von denen zumindest eines der lokalen Stromnetze mit dem nicht lokalen Stromnetz zur Ausführung der nicht ortsgebundenen Regel- und Systemaufgaben verbunden ist
Die hier gezeigten Ausführungsformen stellen nur Beispiele für die vorliegende Erfindung dar und dürfen daher nicht einschränkend verstanden werden.

### Liste der Bezugszeichen

- 1: erfindungsgemäßes Energiespeichersystem
- 2: zentrale Steuereinheit
- 21: Schnittstelle(n) der zentralen Steuereinheit für externe Daten und/oder Einflussdaten
- 22: Datenspeicher der zentralen Steuereinheit
- 2K: Schnittstelle(n) der zentralen Steuereinheit zum Kommunikationsnetzwerk
- 3: Kommunikationsnetzwerk
- 31: kabelgebundenes Sub-Kommunikationsnetz
- 32: funkgebundenes Sub-Kommunikationsnetz
- 33: stromgebundenes Sub-Kommunikationsnetz
- 4, 41, 42, 43: lokale Energiespeicheranlage
- 41-1,42-1,43-1: lokale Steuereinheit der lokalen Energiespeicheranlage
- 41-2,42-2,43-2: Messeinheit der lokalen Energiespeicheranlage
- 41-3,42-3,43-3: Regeleinheit zum Anschluss der lokalen Energiespeicheranlage an die Stromnetze
- 41-4,42-4,43-4: Aufgabenspeicher der lokalen Energiespeicheranlage
- 44: Energiespeichermodule
- 45: Aufschaltpunkt der Energiespeichermodule
- 4G: Regelverbund für das nicht lokale Stromnetz aus mehreren lokalen Energiespeicheranlagen für einen besonderen Zweck (z.B. Schwarzstart)
- 4R: regionaler Verbund aus mehreren lokalen Energiespeicheranlagen
- 4K: Schnittstelle(n) der lokalen Energiespeicheranlagen zum Kommunikationsnetzwerk
- 5: nicht lokales Stromnetz
- 5A: Ausfall des nicht lokalen Stromnetzes
- 6, 61,62,63,64: lokales Stromnetz
- 7: externes System (übergeordnete Steuerung)
- 8: Messsystem zur Bestimmung von Einflussdaten
- 9: Energiespeichereinheit, beispielsweise ein Schwungradenergiespeicher
- 10: Regelbox
- 10-1: Regelglied
- 10-2: Trennschalter

- B: Bestimmen einzelner oder einer Anzahl an lokalen Energiespeicheranlagen für einen Regelverbund, einen regionalen Verbund oder zur Schwarzstartunterstützung
- BD: Betriebsdaten der lokalen Energiespeicheranlage
- BL: Bilanzmodul
- BM: Betriebsmodell
- ED1: externe Daten
- ED2: Einflussdaten
- EF: Energiefluss
- EFnl: Energiefluss in/aus das/dem nicht lokalen Stromnetz
- EFI: Energiefluss in/aus das/dem lokalen Stromnetz
- En: Aufnahme von Energie aus dem Stromnetz durch die Energiespeicheranlage (Bereitstellung negativer Energie)
- Ep: Abgabe von Energie in das Stromnetz durch die Energiespeicheranlage (Bereitstellung positiver Energie)
- NLRS: nicht ortsgebundene Regel- und Steueraufgaben
- GUI: graphische Benutzeroberfläche
- H: Hierarchie der Führung im Regelverbund oder im regionalen Verbund
- HS: Prüfen des Bestehens der Kommunikationsverbindung
- KA: konfigurieren oder aktualisieren des Aufgabenspeichers
- KD: Konfigurationsdaten der Anlagenfunktion
- KD-R: Konfigurationsdaten der Reglerfunktion in Regelbox
- LL: lokale Leistung der lokalen Energiespeicheranlage
- LLg: frei nicht lokale Leistung für NLRS
- LLI: lokale Leistung benötifgt für ortsgebundene Regel- und Systemaufgaben
- LRS: ortsgebundene Regel- und Systemaufgaben
- LSK: lokale Speicherkapazität der lokalen Energiespeicheranlage
- LSKg: für die nicht ortsgebundenen Regel- und Systemaufgaben verfügbare lokale Speicherkapazität (freie nicht lokale Kapazität)
- LSKI: für die ortsgebundenen Regel- und Systemaufgaben vorgesehene lokale Speicherkapazität
- NB: Normalbetrieb
- P1, P2, P3: geographische (räumlich) Position der Energiespeicheranlage
- RD: relevante Daten des lokalen Stromnetzes
- RP: Reportmodul
- RS: Regel- und Systemaufgaben, beispielsweise LRS und/oder NLRS
- RRS: regionale Regel- und Systemaufgaben
- SNL: Steuern der jeweiligen lokalen Energiespeicheranlage für nicht ortsgebundene Regel- und Systemaufgaben
- SL: Steuern der jeweiligen lokalen Energiespeicheranlage für ortsgebundene Regel- und Systemaufgaben
- SL-A: ausschließliches Steuern der jeweiligen lokalen Energiespeicheranlage für ortsgebundene Regel- und Systemaufgaben
- SU: Schwarzstartunterstützung
- U1: Übermitteln der nicht für die ortsgebundenen Regel- und Systemaufgaben benötigten Kapazitäten an die zentrale Steuereinheit
- U2: Übermitteln zusätzlicher oder veränderter vorrangiger lokaler oder regionaler Regelaufgaben an die bestimmten Energiespeicheranlagen im regionalen Verbund
- U3: Übertragen der Aufgabe zur Steuerung des Regelverbunds und/oder des regionalen Verbunds an eine bestimmte lokale Steuereinheit
- U4: Übermitteln einer Hierarchie der lokalen Steuereinheiten im Regelverbund und/oder im regionalen Verbund an die jeweiligen lokalen Steuereinheiten
- V-LRS: vorrangige ortsgebundene Regel- und Systemaufgaben für einen regionalen Verbund bestimmter lokaler Energiespeicheranlagen
- VS: Verteilungssteuerungsmodul zur Verteilung der nicht ortsgebundenen Regel- und Systemaufgaben an die jeweiligen lokalen Energiespeicheranlagen
- Z: Zugreifen der lokalen Steuereinheit auf den Aufgabenspeicher
- ZA-4: Zustandsaufnahmemodul für die lokalen Energiespeicheranlagen
- ZA-5: Zustandsaufnahmemodul für das nicht lokale Stromnetz
- Z-NLRS: Zuweisungsmodul zur Zuweisung nicht lokaler Regel- und Systemaufgaben an die Energiespeicheranlagen

## Patentansprüche

1. Ein Energiespeichersystem (1), umfassend ein oder mehrere lokale Energiespeicheranlagen (4, 41, 42, 43) mit einer jeweiligen lokalen Speicherkapazität (LSK) und lokaler Leistung (LL) geeignet zur Aufnahme (En) und Abgabe (Ep) von Energie an angeschlossene Stromnetze (5, 6, 61, 62, 63, 64), wobei jeweils die ein oder mehreren lokalen Energiespeicheranlagen (4, 41, 42, 43) direkt an ein nicht lokales Stromnetz (5) als ein öffentliches Stromnetz und ebenfalls an ein oder mehrere lokale Stromnetze (6, 61, 62, 63, 64) als-betriebsinterne Stromnetze oder ein Stromnetz innerhalb eines Hauses oder Gebäudekomplexes oder Stromnetze eines Windenergieparks oder eines Solarkraftwerks angeschlossen sind, wobei der Anschluss an die Stromnetze (5, 6, 61, 62, 63, 64) so ausgestaltet ist, dass die lokalen und nicht lokalen Stromnetze gleichzeitig und unabhängig voneinander von der Energiespeicheranlage mit Energie versorgt werden können oder aus den Stromnetzen Energie abgenommen werden kann, und mindestens eine lokale Steuereinheit (41-1, 42-1, 43-1) umfassen, die zumindest zur Steuerung der jeweiligen Energiespeicheranlage (41, 42, 43) für ortsgebundene Regel- und Systemaufgaben (LRS) zur Verbesserung einer lokalen Netzqualität für das oder die jeweiligen lokalen Stromnetze (6, 61, 62, 63, 64) vorgesehen ist und das Energiespeichersystem (1) des Weiteren eine über ein Kommunikationsnetzwerk (3) mit den jeweiligen lokalen Steuereinheiten (41-1, 42-1, 43-1) verbundene zentrale Steuereinheit (2) umfasst, die zur Steuerung (SNL) der Aufnahme (En) und Abgabe (Ep) von Energie der ein oder mehreren lokalen Energiespeicheranlagen (4, 41, 42, 43) an das nicht lokale Stromnetz (5) vorgesehen ist, wobei die zentrale Steuereinheit (2) dazu ausgestattet ist, über alle freien Anteile der lokalen Speicherkapazitäten (LSKg) und der lokalen Leistung (LLg) der ein oder mehreren Energiespeicheranlagen (4, 41, 42, 43) für nicht ortsgebundene Regel- und Systemaufgaben (NLRS) wie beispielsweise eine Bereitstellung von primärer und sekundärer Regelleistung oder eine Unterstützung eines Schwarzstartes, eine Speicherung von Leistungsspitzen eine Blindleistungskompensation oder eine Steigerung von Übertragungsleistung im nicht lokalen Stromnetz (5) zu verfügen, die von den jeweiligen lokalen Steuereinheiten (41-1, 42-1, 43-1) als für die ortsgebundenen Regel- und Systemaufgaben (LRS) nicht benötigt über das Kommunikationsnetzwerk (3) zu der zentralen Steuereinheit (2) übermittelt wurden,
**dadurch gekennzeichnet,**
**dass** die lokale Energiespeicheranlage (4, 41, 42, 43) eine Regeleinheit (41-3, 42-3, 43-3) mit einer Regelbox (10) mit einem Regelglied (10-1) und separaten Trennschaltern (10-2) für jedes der angeschlossenen Stromnetze (5, 6) umfasst, wobei die lokale Steuereinheit (41-1) über eine Datenverbindung mit dem Regelglied (10-1) zur Übermittlung von Konfigurationsdaten gemäß einer Reglerfunktion (KD-R) zur Steuerung von Energieflüssen verbunden ist, umfasst, wobei an die Regeleinheit (41-3, 42-3, 43-3) die ein oder mehreren lokalen Stromnetze (6, 61, 62, 63, 64) und das nicht lokale Stromnetz (5) angeschlossen sind, wobei die Regeleinheit (41-3, 42-3, 43-3) dazu ausgestaltet ist, den Energiefluss zwischen den angeschlossenen Stromnetzen (5, 6, 61, 62, 63, 64) und der Energiespeicheranlage (4, 41, 42, 43) zu regeln, wobei das Regelglied (10-1) aufgrund der Konfigurationsdaten der Reglerfunktion (KD-R) die Verteilung des vom Aufschaltpunkt (45) eingehenden Energieflusses (EF) auf die angeschlossenen Stromnetze (5, 6) als Energiefluss (EFI) für das lokale Stromnetz (6) und als Energiefluss (EFg) für das nicht lokale Stromnetz (5) steuert.

2. Das Energiespeichersystem (1) nach Anspruch 1,
**dadurch gekennzeichnet,**
**dass** die lokale Energiespeicheranlage (4, 41, 42, 43) ein oder mehrere Schwungradenergiespeicher (9) zur Aufnahme (En) von Energie aus den angeschlossenen Stromnetzen (5, 6, 61, 62, 63, 64) und zur Abgabe (Ep) von Energie an die angeschlossenen Stromnetze (5, 6, 61, 62, 63, 64) umfasst.

3. Das Energiespeichersystem (1) nach Anspruch 1 oder 2,
**dadurch gekennzeichnet,**
**dass** die lokale Energiespeicheranlage (4, 41, 42, 43) ein oder mehrere Messeinheiten (41-2, 42-2, 43-2) zur Messung ein oder mehrerer relevanter Daten (RD) im jeweilig angeschlossenen Stromnetz (5, 6, 61, 62, 63, 64) umfasst und dass die Steuereinheit (41-1, 42-1, 43-1) dazu vorgesehen ist, die Steuerung der lokalen Energiespeicheranlage (4, 41, 42, 43) für das jeweilig angeschlossene Stromnetz (5, 6, 61, 62, 63, 64) auf Basis der mit den Messeinheiten gemessenen relevanten Daten (RD) auszuführen, vorzugsweise umfassen die gemessenen Daten (RD) die aktuelle Netzfrequenz, damit die Steuereinheit (41-1, 42-1, 43-1) automatisch auf Basis der aktuellen gemessenen Netzfrequenz gemäß einer in der lokalen Steuerung hinterlegten Reaktionsreihenfolge Energie in das lokale Stromnetz einspeisen kann.

4. Das Energiespeichersystem (1) nach einem der vorstehenden Ansprüche,
**dadurch gekennzeichnet,**
**dass** die Regeleinheit (41-3, 42-3, 43-3) dazu vorgesehen ist, ein oder mehrere der angeschlossenen Stromnetze (5, 6, 61, 62, 63, 64) im Bedarfsfall von der lokalen Energiespeicheranlage (4, 41, 42, 43) zu trennen.

5. Das Energiespeichersystem (1) nach einem der vorstehenden Ansprüche,
**dadurch gekennzeichnet,**
**dass** die zentrale Steuereinheit (2) Betriebsdaten (BD) von den lokalen Steuereinheiten (41-1, 42-1, 43-1) über das Kommunikationsnetz (3) übermittelt bekommt und aufgrund der übermittelten Betriebsdaten (BD) der oder den lokalen Energiespeicheranlagen (4, 41, 42, 43) zumindest nicht ortsgebundene Regel- und Systemaufgaben (NLRS) und zur Abgabe (En) von Energie an dem nicht lokalen Stromnetz und/oder zur Aufnahme (Ep) von Energie aus dem nicht lokalen Stromnetz (5) über das Kommunikationsnetz (3) übermittelt.

6. Das Energiespeichersystem (1) nach Anspruch 5,
**dadurch gekennzeichnet,**
**dass** die lokale Energiespeicheranlage (4, 41, 42, 43) einen Aufgabenspeicher (41-4, 42-4, 43-4) zur Speicherung der ortsgebundenen und nicht ortsgebundenen Regel- und Systemaufgaben (LRS, NLRS) umfasst, der von der zentralen Steuereinheit (2) zumindest bezüglich der nicht ortsgebundenen Regel- oder Systemaufgaben (NLRS) im nicht lokalen Stromnetz (5) konfiguriert und/oder aktualisiert (KA) wird und auf den die lokale Steuereinheit (41-1, 42-1, 43-1) zur Steuerung des lokalen Energiespeichers (4, 41, 42, 43) gemäß der nicht ortsgebundenen und ortsgebundenen Regel- oder Systemaufgaben (NLRS, LRS) zugreift, vorzugsweise ist die lokale Steuereinheit (41-1, 42-1, 43-1) dabei dazu ausgestaltet, den ortsgebundenen Regel- und Systemaufgaben (LRS) zur Steuerung der jeweiligen Energiespeicheranlage (4, 41, 42, 43) Vorrang vor den nicht ortsgebundenen Regel- und Systemaufgaben (NLRS) zu geben.

7. Das Energiespeichersystem (1) nach einem der Ansprüche 5 oder 6,
**dadurch gekennzeichnet,**
**dass** die lokale Energiespeicheranlage (4, 41, 42, 43) bei Ausfall des Kommunikationsnetzwerkes (3) und/oder der zentralen Steuereinheit (2) zur ausschließlichen Durchführung (SL-A) der ortsgebundenen Regel- und Systemaufgaben (LRS) für das oder die jeweiligen lokalen Stromnetze (6, 61, 62, 63, 64) im Aufgabenspeicher (41-4, 42-4, 43-4) vorgesehen ist.

8. Das Energiespeichersystem (1) nach einem der vorstehenden Ansprüche,
**dadurch gekennzeichnet,**
**dass** die zentrale Steuereinheit (2) ein oder mehrere Schnittstellen (21) zu externen Systemen (7) zum Empfang von externen Daten (ED1) für eine übergeordnete Steuerung des Energiespeichersystems (1) umfasst und dazu vorgesehen ist, anhand dieser externen Daten (ED1) einzelne oder eine Anzahl an lokalen Energiespeicheranlagen (41, 42) zu bestimmen, die für nicht ortsgebundene Regel- oder Systemaufgaben (NLRS) im nicht lokalen Stromnetz (5) bevorzugt gegenüber anderen lokalen Energiespeicheranlagen (43) vorgesehen sind und einen Regelverbund (4G) für das nicht lokale Stromnetz (5) bilden.

9. Das Energiespeichersystem (1) nach einem der vorstehenden Ansprüche,
**dadurch gekennzeichnet,**
**dass** die zentrale Steuereinheit (2) dazu vorgesehen ist, anhand von lokalen oder nicht lokalen Einflussdaten (ED2) einzelne oder eine Anzahl an lokalen Energiespeicheranlagen (41, 42) zu bestimmen, die einen regionalen Verbund (4R) aus den bestimmten Energiespeicheranlagen (41, 42) bilden und ihnen zusätzliche oder veränderte vorrangige ortsgebundene Regel- und Systemaufgaben (V-LRS) als regionale Regel- und Systemaufgaben (RRS) zu übermitteln.

10. Das Energiespeichersystem nach einem der Ansprüche 8 oder 9,
**dadurch gekennzeichnet,**
**dass** die Steuereinheiten (41-1, 42-1) der Energiespeicheranlagen (41, 42) des Regelverbunds (4G) und/oder des regionalen Verbunds (4R) dazu ausgestaltet sind, über das Kommunikationsnetzwerk (3) zur Ausführung der nicht ortsgebundenen Regel- oder Systemaufgaben (NLRS) und/oder regionalen Regel- und Systemaufgaben (RRS) ohne Einbeziehung der zentralen Steuereinheit (2) direkt miteinander zu kommunizieren.

11. Das Energiespeichersystem (1) nach Anspruch 10,
**dadurch gekennzeichnet,**
**dass** die zentrale Steuereinheit (2) die Aufgabe zur Steuerung des Regelverbunds (4G) und/oder des regionalen Verbunds (4R) zumindest zeitweise an eine von der zentralen Steuereinheit (2) bestimmten lokalen Steuereinheit (41-1) im Regelverbund (4G) und/oder im regionalen Verbund (4R) überträgt, vorzugsweise übermittelt die zentrale Steuereinheit (2) zusammen mit der Übertragung der Steueraufgabe eine Hierarchie (H) der lokalen Steuereinheiten (41-1, 42-1) im Regelverbund (4G) und/oder im regionalen Verbund (4R), wobei die in der Hierarchie (H) folgende lokale Steuereinheit (42-1) bei Ausfall der mit der Steuerung beauftragten Steuereinheit (41-1) oder der entsprechenden lokalen Energiespeicheranlage (41) zur Steuerung des Regelverbunds (4G) und/oder des regionalen Verbunds (4R) vorgesehen ist.

12. Das Energiespeichersystem (1) nach einem der vorstehenden Ansprüche,
**dadurch gekennzeichnet,**
**dass** die lokale Steuereinheit (41-1, 42-1, 43-1) dazu ausgestaltet ist, die bestehende Verbindung zur zentralen Steuereinheit (2) über das Kommunikationsnetz (3) periodisch zu prüfen und dass die lokale Steuereinheit (41-1, 42-1, 43-1) dazu ausgestaltet ist, im Falle einer unterbrochenen Verbindung zur zentralen Steuereinheit (2) diese Verbindung über ein im Kommunikationsnetzwerk (3) vorhandenes alternatives Sub-Kommunikationsnetz (31, 32, 33) wieder herzustellen.

13. Ein Verfahren zum Betreiben eines Energiespeichersystems (1) nach Anspruch 1, umfassend ein oder mehrere lokale Energiespeicheranlagen (4, 41, 42, 43) mit einer jeweiligen lokalen Speicherkapazität (LSK) und lokaler Leistung (LL), die jeweils mittels einer Regeleinheit (41-3, 42-3, 43-3) zur Aufnahme (En) und Abgabe (Ep) von Energie aus/an ein oder mehrere lokale Stromnetze (6, 61, 62, 63, 64) und das nicht lokale Stromnetz (5) angeschlossen sind, wobei die Regeleinheit (41-3, 42-3, 43-3) eine Regelbox (10) mit einem Regelglied (10-1) und separate Trennschalter (10-2) für jedes der angeschlossenen Stromnetze (5, 6) umfasst, umfassend die Schritte
- Steuern (SL) der jeweiligen lokalen Energiespeicheranlage (4, 41, 42, 43) für ortsgebundene Regel- und Systemaufgaben (LRS) zur Verbesserung einer lokalen Netzqualität in einem oder mehreren an die lokale Energiespeicheranlage (4, 41, 42, 43) angeschlossenen lokalen Stromnetzen (6, 61, 62, 63, 64) als räumlich begrenzte Stromnetze umfassend betriebsinterne Stromnetze oder ein Stromnetz innerhalb eines Hauses oder Gebäudekomplexes oder Stromnetze eines Windenergieparks oder eines Solarkraftwerks mittels einer lokalen Steuereinheit (41-1, 42-1, 43-1) im Rahmen der für das oder die lokalen Stromnetze (6, 61, 62, 63, 64) vorgesehenen Kapazität (LSKI) und Leistung (LLI) der Energiespeicheranlage (4, 41, 42, 43),
- Übermitteln (U1) der nicht für die ortsgebundenen Regel- und Systemaufgaben benötigten Kapazitäten (LSKg) und Leistung (LLg) der lokalen Energiespeicheranlage (4, 41, 42, 43) durch die lokale Steuereinheit (41-1, 42-1, 43-1) über ein angeschlossenes Kommunikationsnetzwerk (3) zu einer ebenfalls an das Kommunikationsnetzwerk (3) angeschlossenen zentralen Steuereinheit (2), und
- Steuern (SNL) der jeweiligen lokalen Energiespeicheranlage (41, 42, 43) zur Aufnahme (En) und Abgabe (Ep) von Energie für nicht ortsgebundene Regel- und Systemaufgaben (NLRS) wie beispielsweise eine Bereitstellung von primärer und sekundärer Regelleistung oder eine Unterstützung eines Schwarzstartes, eine Speicherung von Leistungsspitzen eine Blindleistungskompensation oder eine Steigerung von Übertragungsleistung in ein ebenfalls an die lokale Energiespeicheranlage (4, 41, 42, 43) direkt angeschlossenes nicht lokales Stromnetz (5) als ein öffentliches Stromnetz mittels der zentralen Steuereinheit (2) über das Kommunikationsnetzwerk (3) im Rahmen der freien Anteile aller an die zentrale Steuereinheit (2) übermittelten nicht für die ortsgebundenen Regel- und Systemaufgaben (LRS) benötigten Kapazitäten (LSKg) und Leistung (LLg) der Energiespeicheranlage (4, 41, 42, 43), wobei der Anschluss der Stromnetze so ausgestaltet ist, dass die lokalen und nicht lokalen Stromnetze gleichzeitig und unabhängig voneinander von der Energiespeicheranlage mit Energie versorgt werden können oder aus den Stromnetzen Energie abgenommen werden kann,
wobei die lokale Steuereinheit (41-1) über eine Datenverbindung mit dem Regelglied (10-1) zur Übermittlung von Konfigurationsdaten gemäß einer Reglerfunktion (KD-R) zur Steuerung der Energieflüsse verbunden ist, wobei die Regeleinheit (41-3, 42-3, 43-3) dazu ausgestaltet ist, einen Energiefluss zwischen den angeschlossenen Stromnetzen (5, 6, 61, 62, 63, 64) und der Energiespeicheranlage (4, 41, 42, 43) zu regeln, wobei das Regelglied (10-1) aufgrund der Konfigurationsdaten der Reglerfunktion (KD-R) die Verteilung des vom Aufschaltpunkt (45) eingehenden Energieflusses (EF) auf die angeschlossenen Stromnetze (5, 6) als Energiefluss (EFI) für das lokale Stromnetz (6) und als Energiefluss (EFg) für das nicht lokale Stromnetz (5) steuert.

14. Das Verfahren nach Anspruch 13, umfassend die weiteren Schritte:
- Konfigurieren und/oder Aktualisieren (KA) zumindest der nicht lokaler Regel- oder Systemaufgaben (NLRS) für das nicht lokalen Stromnetz (5) in einem Aufgabenspeicher (41-4, 42-4, 43-4) der lokalen Energiespeicheranlage (4, 41, 42, 43), der zusätzlich dazu die ortsgebundenen Regel- und Systemaufgaben (LRS) umfasst,
- Zugreifen (Z) der lokalen Steuereinheit (41-1, 42-1, 43-1) auf den Aufgabenspeicher (41-4, 42-4, 43-4) zur Steuerung (SNL, SL) des lokalen Energiespeichers (4, 41, 42, 43),
- vorrangiges Steuern (SL) der Energiespeicheranlage (4, 41, 42, 43) für ortsgebundene Regel- und Systemaufgaben (LRS) durch die lokale Steuereinheit (41-1, 42-1, 41-3) gemäß Aufgabenspeicher (41-4, 42-4, 43-4) im Normalbetrieb (NB) und
- ausschließliche Durchführung (SL-A) der ortsgebundenen Regel- und Systemaufgaben (LRS) für das oder die jeweiligen lokalen Stromnetze (6, 61, 62, 63, 64) bei Ausfall des Kommunikationsnetzwerkes (3, 31, 32, 33) und/oder der zentralen Steuereinheit (2).

## Claims

1. An energy storage system (1), comprising one or more local energy storage systems (4, 41, 42, 43) with a respective local storage capacity (LSK) and local output (LL) suitable for absorbing (En) and emitting (Ep) energy to connected power supply grids (5, 6, 61, 62, 63, 64), with the one or more local energy storage systems (4, 41, 42, 43) each being connected directly to a non-local power supply grid (5) as a public power supply grid and also to one or more local power supply grids (6, 61, 62, 63, 64) as in-house power supply grids or a power supply grid within a house or building complex or power supply grids of a wind farm or solar power plant, the connection to the power supply grids (5, 6, 61, 62, 63, 64) being configured such that, simultaneously and independently of each other, the local and non-local power supply grids can be supplied with energy by the energy storage system, or energy can be absorbed from the power supply grids, and comprise at least one local control unit (41-1, 42-1, 43-1), which is intended at least for control of the respective energy storage system (41, 42, 43) for localised regulating and system tasks (LRS) to improve a local power supply quality for the one or more respective local power supply grids (6, 61, 62, 63, 64), and the energy storage system (1) further comprising a central control unit (2) connected via a communication network (3) to the respective local control units (41-1, 42-1, 43-1), which is intended for the control (SNL) of the absorbing (En) and emission (Ep) of energy by the one or more local energy storage systems (4, 41, 42, 43) to the non-local power supply grid (5), with the central control unit (2) being equipped for having at its disposal all available portions of the local storage capacities (LSKg) and of the local output (LLg) of the one or more energy storage systems (4, 41, 42, 43) for non-localised regulating and system tasks (NLRS), such as e.g. a provision of primary and secondary control power or support of a black start, a storage of output peaks, a reactive power compensation or an increase in transmission output in the non-local power supply grid (5), which have been submitted by the respective local control units (41-1, 42-1, 43-1) to the central control unit (2) via the communication network (3) as not needed for the localised regulating and system tasks (LRS),
**characterised in that**
the local energy storage system (4, 41, 42, 43) comprises a regulating unit (41-3, 42-3, 43-3) with a regulating box (10) with a regulating element (10-1) and separate disconnection switches (10-2) for each of the connected power supply grids (5, 6), wherein the local control unit (41-1) is connected to the regulating element (10-1) via a data connection to submit configuration data according to a regulation function (KD-R) for control of energy flows, wherein the one or more local power supply grids (6, 61, 62, 63, 64) and the non-local power supply grid (5) are connected to the regulating unit (41-3, 42-3, 43-3), wherein the regulating unit (41-3, 42-3, 43-3) is configured to regulate the energy flow between the connected power supply grids (5, 6, 61, 62, 63, 64) and the energy storage system (4, 41, 42, 43), wherein the regulating element (10-1), based on the configuration data of the regulating function (KD-R), controls the distribution of the energy flow (EF) incoming from the connection point (45) to the connected power supply grids (5, 6) as energy flow (EFI) for the local power supply grid (6) and as energy flow (EFg) for the non-local power supply grid (5).

2. The energy storage system (1) according to claim 1,
**characterised in that**
the local energy storage system (4, 41, 42, 43) comprises one or more flywheel energy accumulators (9) to absorb (En) energy from the connected power supply grids (5, 6, 61, 62, 63, 64) and to emit (Ep) energy to the connected power supply grids (5, 6, 61, 62, 63, 64).

3. The energy storage system (1) according to claim 1 or 2,
**characterised in that**
the local energy storage system (4, 41, 42, 43) comprises one or more measuring units (41-2, 42-2, 43-2) to measure one or more relevant data (RD) in the respective connected power supply grid (5, 6, 61, 62, 63, 64) and that the control unit (41-1, 42-1, 43-1) is intended to execute control of the local energy storage system (4, 41, 42, 43) for the respective connected power supply grid (5, 6, 61, 62, 63, 64) based on the relevant data (RD) measured by the measuring units, the measured data (RD) preferably comprising the current line frequency so that the control unit (41-1, 42-1, 43-1) can automatically feed in energy into the local power supply grid based on the current measured line frequency according to a reaction sequence stored in the local control unit.

4. The energy storage system (1) according to one of the preceding claims,
**characterised in that**
the regulating unit (41-3, 42-3, 43-3) is intended to disconnect one or more of the connected power supply grids (5, 6, 61, 62, 63, 64) from the local energy storage system (4, 41, 42, 43) when necessary.

5. The energy storage system (1) according to one of the preceding claims,
**characterised in that**
the central control unit (2) receives operating data (BD) submitted by the local control units (41-1, 42-1, 43-1) via the communication network (3) and, based on the submitted operating data (BD), submits at least non-localised regulating and system tasks (NLRS) and for the emission (En) of energy to the non-local power supply grid and/or for the absorption (Ep) of energy from the non-local power supply grid (5) to the local energy storage system or systems (4, 41, 42, 43) via the communication network (3).

6. The energy storage system (1) according to claim 5,
**characterised in that**
the local energy storage system (4, 41, 42, 43) comprises a task storage (41-4, 42-4, 43-4) for storage of the localised and non-localised regulating and system tasks (LRS, NLRS), which is configured and/or updated (KA) by the central control unit (2) at least regarding the non-localised regulating or system tasks (NLRS) in the non-local power supply grid (5) and which the local control unit (41-1, 42-1, 43-1) accesses for control of the local energy storage (4, 41, 42, 43) according to the non-localised and localised regulating or system tasks (NLRS, LRS), the local control unit (41-1, 42-1, 43-1) preferably being designed to give the localised regulating and system tasks (LRS) for control of the respective energy storage system (4, 41, 42, 43) precedence over the non-localised regulating and system tasks (NLRS).

7. The energy storage system (1) according to one of claims 5 or 6,
**characterised in that**
the local energy storage system (4, 41, 42, 43) is intended for exclusive execution (SL-A) of the localised regulating and system tasks (LRS) for the one or more respective local power supply grids (6, 61, 62, 63, 64) in the task storage (41-4, 42-4, 43-4) in the event of failure of the communication network (3) and/or of the central control unit (2).

8. The energy storage system (1) according to one of the preceding claims,
**characterised in that**
the central control unit (2) comprises one or more interfaces (21) to external systems (7) for receiving external data (ED1) for a superordinate control of the energy storage system (1) and is intended to determine, based on these external data (ED1), individual or a number of local energy storage systems (41, 42) that are intended for non-localised regulating or system tasks (NLRS) in the non-local power supply grid (5) preferentially as compared to other local energy storage systems (43) and that form a regulating network (4G) for the non-local power supply grid (5).

9. The energy storage system (1) according to one of the preceding claims,
**characterised in that**
the central control unit (2) is intended to determine, based on local or non-local influence data (ED2), individual or a number of local energy storage systems (41, 42) which form a regional network (4R) made up of the specific energy storage systems (41, 42) and to submit to them additional or changed priority localised regulating and system tasks (V-LRS) as regional regulating and system tasks (RRS).

10. The energy storage system (1) according to one of claims 8 or 9,
**characterised in that**
the control units (41-1, 42-1) of the energy storage systems (41, 42) of the regulating network (4G) and/or of the regional network (4R) are designed to communicate with each other directly via the communication network (3) for execution of the non-localised regulating or system tasks (NLRS) and/or regional regulating and system tasks (RRS) without involving the central control unit (2).

11. The energy storage system (1) according to claim 10,
**characterised in that**
the central control unit (2) at least temporarily assigns the task of control of the regulating network (4G) and/or the regional network (4R) to a local control unit (41-1) in the regulating network (4G) and/or in the regional network (4R) determined by the central control unit (2), the central control unit (2) preferably submitting a hierarchy (H) of the local control units (41-1, 42-1) in the regulating network (4G) and/or in the regional network (4R) together with the transfer of the control task, with the local control unit (42-1) following in the hierarchy (H) being intended to control the regulating network (4G) and/or the regional network (4R) in the event of failure of the control unit (41-1) charged with control or of the corresponding local energy storage system (41).

12. The energy storage system (1) according to one of the preceding claims,
**characterised in that**
the local control unit (41-1, 42-1, 43-1) is designed to periodically review the existing connection with the central control unit (2) via the communication network (3) and that the local control unit (41-1, 42-1, 43-1) is designed to recover this connection in case of interruption of the connection with the central control unit (2) via an alternative sub-communication network (31, 32, 33) present in the communication network (3).

13. A procedure for operation of an energy storage system (1) according to claim 1, comprising one or more local energy storage systems (4, 41, 42, 43) with a respective local storage capacity (LSK) and local output (LL), which are each connected via a regulating unit (41-3, 42-3, 43-3) to absorb (En) and emit (Ep) energy from/to one or more local power supply grids (6, 61, 62, 63, 64) and the non-local power supply grid (5), wherein the regulating unit (41-3, 42-3, 43-3) comprises a regulating box (10) with a regulating element (10-1) and separate disconnection switches (10-2) for each of the connected power supply grids (5, 6), comprising the steps of
- controlling (SL) of the respective local energy storage system (4, 41, 42, 43) for localised regulating and system tasks (LRS) to improve a local power supply quality in one or more local power supply grids (6, 61, 62, 63, 64) connected to the local energy storage system (4, 41, 42, 43) as spatially limited power supply grids comprising in-house power supply grids or a power supply grid within a house or building complex or power supply grids of a wind farm or a solar power plant by a local control unit (41-1, 42-1, 43-1) in the scope of the capacity (LSKI) and output (LLI) of the energy storage system (4, 41, 42, 43) intended for the one or more local power supply grids (6, 61, 62, 63, 64),
- submitting (U1) of the capacities (LSKg) and output (LLg) of the local energy storage system not required for the localised regulating and system tasks by the local control unit (41-1, 42-1, 43-1) via a connected communication network (3) to a central control unit (2) also connected to the communication network (3), and
- controlling (SNL) of the respective local energy storage system (41, 42, 43) to absorb (En) and emit (Ep) energy for non-localised regulating and system tasks (NLRS) such as for example provision of primary and secondary control power or support of a black start, a storage of output peaks, a reactive power compensation or an increase in transmission output in a non-local power supply grid (5) which is also directly connected to the local energy storage system (4, 41, 42, 43) as a public power supply grid by the central control unit (2) via the communication network (3) in the scope of the available portions of all capacities (LSKg) and output (LLg) of the energy storage system (4, 41, 42, 43) not required for the localised regulating and system tasks (LRS) submitted to the central control unit, the connection of the power supply grids being designed such that, simultaneously and independently of each other, the local and non-local power supply grids can be supplied with energy by the energy storage system or energy can be absorbed from the power supply grids,
wherein the local control unit (41-1) is connected to the regulating element (10-1) via a data connection to submit configuration data according to a regulation function (KD-R) to control the energy flows,
wherein the regulating unit (41-3, 42-3, 43-3) is designed to regulate an energy flow between the connected power supply grids (5, 6, 61, 62, 63, 64) and the energy storage system (4, 41, 42, 43), wherein the regulating element (10-1), based on the configuration data of the regulating function (KD-R), controls the distribution of the energy flow (EF) incoming from the connection point (45) to the connected power supply grids (5, 6) as energy flow EFI for the local power supply grid (6) and as energy flow (EFg) for the non-local power supply grid (5).

14. The procedure according to claim 13, comprising the further steps of:
- configuring and/or updating (KA) of at least the non-local regulating or system tasks (NLRS) for the non-local power supply grid (5) in a task storage (41-4, 42-4, 43-4) of the local energy storage system (4, 41, 42, 43), which additionally comprises the localised regulating and system tasks (LRS),
- accessing (Z) of the task storage (41-4, 42-4, 43-4) by the local control unit (41-1, 42-1, 43-1) for control (SNL, SL) of the local energy storage system (4, 41, 42, 43),
- priority controlling (SL) of the energy storage system (4, 41, 42, 43) for localised regulating and system tasks (LRS) by the local control unit (41-1, 42-1, 43-1) according to the task storage (41-4, 42-4, 43-4) in regular operation (NB) and
- exclusive execution (SL-A) of the localised regulating and system tasks (LRS) for the one or more respective local power supply grids (6, 61, 62, 63, 64) in the event of failure of the communication network (3, 31, 32, 33) and/or of the central control unit (2).

## Revendications

1. Système d'accumulation d'énergie (1), comprenant une ou plusieurs installations locales d'accumulation d'énergie (4, 41, 42, 43) ayant une capacité d'accumulation locale respective (LSK) et une puissance locale (LL) appropriées pour l'absorption (En) et la restitution (Ep) d'énergie à des réseaux électriques raccordés (5, 6, 61, 62, 63, 64), l'une ou les plusieurs installations locales d'accumulation d'énergie (4, 41, 42, 43) étant directement raccordées à un réseau électrique non local (5) en tant qu'un réseau électrique public et également à un ou à plusieurs réseaux électriques locaux (6, 61, 62, 63, 64) en tant que réseaux électriques internes, ou à un réseau électrique disposé dans une maison ou dans un complexe de bâtiments, ou à des réseaux électriques d'un parc d'énergie éolienne ou d'une centrale solaire, le raccordement aux réseaux électriques (5, 6, 61, 62, 63, 64) étant conçu de manière à ce que les réseaux électriques locaux et non locaux puissent être alimentés en énergie simultanément et indépendamment les uns des autres par l'installation d'accumulation d'énergie, ou de manière à ce que l'énergie puisse être prélevée des réseaux électriques, et comprenant au moins une unité de commande locale (41-1, 42-1, 43-1) qui est ménagée au moins pour la commande de l'installation d'accumulation d'énergie respective (41, 42, 43) pour des tâches de régulation et des tâches de système locales (LRS) destinées à améliorer une qualité de réseau locale pour le ou les réseaux électriques locaux respectifs (6, 61, 62, 63, 64), et le système d'accumulation d'énergie (1) comprenant en outre une unité de commande centrale (2) raccordée aux unités de commande locales respectives (41-1, 42-1, 43-1) par l'intermédiaire d'un réseau de communication (3), laquelle unité de commande centrale est ménagée pour la commande (SNL) de l'absorption (En) et de la restitution (Ep) d'énergie de l'une ou des plusieurs installations locales d'accumulation d'énergie (4, 41, 42, 43) au réseau électrique non local (5), l'unité de commande centrale (2) étant conçue pour disposer de toutes les fractions libres des capacités d'accumulation locales (LSKg) et de la puissance locale (LLg) de l'une ou des plusieurs installations d'accumulation d'énergie (4, 41, 42, 43) pour des tâches de régulation et des tâches de système non locales (NLRS), comme par exemple une mise à disposition de puissance de régulation primaire et secondaire ou un support d'un démarrage autonome, une accumulation de pointes de puissance, une compensation de puissance réactive ou une augmentation de puissance de transmission dans le réseau électrique non local (5), lesquelles fractions, par l'intermédiaire du réseau de communication (3), ont été transmises à l'unité de commande centrale (2) par les unités de commande locales respectives (41-1, 42-1, 43-1) en tant que non nécessitées pour les tâches de régulation et les tâches de système locales (LRS),
**caractérisé en ce**
**que** l'installation locale d'accumulation d'énergie (4, 41, 42, 43) comprend une unité de régulation (41-3, 42-3, 43-3) dotée d'un coffret de régulation (10) ayant un organe de régulation (10-1) et des coupe-circuit (10-2) séparés pour chacun des réseaux électriques (5, 6) raccordés, l'unité de commande locale (41-1) étant raccordée à l'organe de régulation (10-1) par l'intermédiaire d'une liaison de données pour la transmission de données de configuration suivant une fonction de régulation (KD-R) destinée à la commande de flux d'énergie, l'un ou les plusieurs réseaux électriques locaux (6, 61, 62, 63, 64) et le réseau électrique non local (5) étant raccordés à l'unité de régulation (41-3, 42-3, 43-3), l'unité de régulation (41-3, 42-3, 43-3) étant conçue pour régler le flux d'énergie entre les réseaux électriques raccordés (5, 6, 61, 62, 63, 64) et l'installation d'accumulation d'énergie (4, 41, 42, 43), l'organe de régulation (10-1), en raison des données de configuration de la fonction de régulation (KD-R), commandant la répartition du flux d'énergie (EF), venant du point d'application (45), sur les réseaux électriques raccordés (5, 6) en tant que flux d'énergie (EFI) pour le réseau électrique local (6) et en tant que flux d'énergie (EFg) pour le réseau électrique non local (5).

2. Système d'accumulation d'énergie (1) selon la revendication 1,
**caractérisé en ce**
**que** l'installation d'accumulation d'énergie locale (4, 41, 42, 43) comprend un ou plusieurs accumulateurs d'énergie à volant d'inertie (9) pour l'absorption (En) d'énergie à partir des réseaux électriques raccordés (5, 6, 61, 62, 63, 64) et pour la restitution (Ep) d'énergie aux réseaux électriques raccordés (5, 6, 61, 62, 63, 64).

3. Système d'accumulation d'énergie (1) selon la revendication 1 ou 2,
**caractérisé en ce**
**que** l'installation locale d'accumulation d'énergie (4, 41, 42, 43) comprend une ou plusieurs unités de mesure (41-2, 42-2, 43-2) pour la mesure d'une ou de plusieurs données pertinentes (RD) dans le réseau électrique (5, 6, 61, 62, 63, 64) respectivement raccordé, et en ce que l'unité de commande (41-1, 42-1, 43-1) est ménagée pour réaliser la commande de l'installation locale d'accumulation d'énergie (4, 41, 42, 43) pour le réseau électrique (5, 6, 61, 62, 63, 64) respectivement raccordé sur la base des données (RD) pertinentes mesurées par les unités de mesure, en ce que de préférence les données mesurées (RD) comprennent la fréquence de réseau momentanée afin que l'unité de commande (41-1-, 42-1, 43-1) puisse automatiquement accumuler l'énergie dans le réseau électrique local sur la base de la fréquence de réseau momentanément mesurée selon une série de réactions mémorisées dans la commande locale.

4. Système d'accumulation d'énergie (1) selon l'une quelconque des revendications précédentes,
**caractérisé en ce**
**que** l'unité de régulation (41-3, 42-3, 43-3) est ménagée, en cas de besoin, pour couper de l'installation locale d'accumulation d'énergie (4, 41, 42, 53) un ou plusieurs des réseaux électriques raccordés (5, 6, 61, 62, 63, 64).

5. Système d'accumulation d'énergie (1) selon l'une quelconque des revendications précédentes,
**caractérisé en ce**
**que** l'unité de commande centrale (2) reçoit des données d'exploitation (BD) des unités de commande locales (41-1, 42-1, 43-1) par l'intermédiaire du réseau de communication (3) et, en raison des données d'exploitation (BD) transmises, transmet, par l'intermédiaire du réseau de communication (3), à l'installation locale d'accumulation d'énergie ou aux installations locales d'accumulation d'énergie (4, 41, 42, 43) au moins des tâches de régulation et des tâches de système non locales (NLRS) et pour la restitution (En) d'énergie au réseau électrique non local et/ou pour l'absorption (Ep) d'énergie provenant du réseau électrique non local (5).

6. Système d'accumulation d'énergie (1) selon la revendication 5,
**caractérisé en ce**
**que** l'installation locale d'accumulation d'énergie (4, 41, 42, 43) comprend une mémoire de tâches (41-4, 42-4, 43-4) pour la mémorisation des tâches de régulation et des tâches de système (LRS, NLRS), locales et non locales, laquelle mémoire de tâches est configurée et/ou mise à jour (KA) dans le réseau électrique non local (5) par l'unité de commande centrale (2) au moins en ce qui concerne les tâches de régulation et les tâches de système non locales (NLRS), et à laquelle l'unité de commande locale (41-1, 42-1, 43-1) a accès pour la commande de l'accumulateur d'énergie local (4, 41, 42, 43) selon les tâches de régulation et les tâches de système (LRS, NLRS), non locales et locales, en ce que de préférence l'unité de commande locale (41-1, 42-1, 43-1) est conçue pour donner la priorité aux tâches de régulation et aux tâches de système locales (LRS) pour la commande de l'installation d'accumulation d'énergie respective (4, 41, 42, 43), par rapport aux tâches de régulation et aux tâches de système non locales (NLRS).

7. Système d'accumulation d'énergie (1) selon l'une quelconque des revendications 5 ou 6,
**caractérisé en ce**
**que** l'installation locale d'accumulation d'énergie (4, 41, 42, 43), en cas de défaillance du réseau de communication (3) et/ou de l'unité de commande centrale (2), est ménagée pour la réalisation exclusive (SL-A) dans la mémoire de tâches (41-4, 42-4, 43-4) des tâches de régulation et des tâches de système locales (LRS) pour le ou les réseaux électriques locaux (6, 61, 62, 63, 64).

8. Système d'accumulation d'énergie (1) selon l'une quelconque des revendications précédentes,
**caractérisé en ce**
**que** l'unité de commande centrale (2) comprend une ou plusieurs interfaces (21) vers des systèmes externes (7) pour la réception de données externes (ED1) pour une commande supérieure du système d'accumulation d'énergie (1) et est ménagée, à l'aide de ces donnée externes (ED1), pour déterminer des installations locales individuelles d'accumulation d'énergie ou un nombre d'installations locales d'accumulation d'énergie (41, 42), lesquelles sont ménagées de manière préférée pour les tâches de régulation et les tâches de système non locales (NLRS) par rapport à d'autres installations locales d'accumulation d'énergie (43) et forment un groupement de régulation (4G) pour le réseau électrique non local (5).

9. Système d'accumulation d'énergie (1) selon l'une quelconque des revendications précédentes,
**caractérisé en ce**
**que** l'unité de commande centrale (2) est ménagée, à l'aide de données d'influence (ED2) locales ou non locales, pour déterminer des installations locales individuelles d'accumulation d'énergie ou un nombre d'installations locales d'accumulation d'énergie (41, 42), lesquelles forment un groupement régional (4R) constitué des installations d'accumulation d'énergie (41, 42) déterminées, et pour leur transmettre des tâches de régulation et des tâches de système locales prioritaires (V-LRS), supplémentaires ou modifiées, en tant que tâches de régulation et tâches de système régionales (RRS).

10. Système d'accumulation d'énergie (1) selon l'une quelconque des revendications 8 ou 9,
**caractérisé en ce**
**que** les unités de commande (41-1, 42-1) des installations d'accumulation d'énergie (41, 42) du groupement de régulation (4G) et/ou du groupement régional (4R) sont conçues pour communiquer directement entre elles par l'intermédiaire du réseau de communication (3) pour la réalisation des tâches de régulation ou des tâches de système non locales (NLRS) et/ou des tâches de régulation ou des tâches de système régionales (RRS) sans tenir compte de l'unité de commande centrale (2).

11. Système d'accumulation d'énergie (1) selon la revendication 10,
**caractérisé en ce**
**que** l'unité de commande centrale (2) transmet la tâche de commande du groupement de régulation (4G) et/ou du groupement régional (4R) au moins temporairement à une unité de commande (41-1) locale déterminée dans le groupement de régulation (4G) et/ou dans le groupement régional (4R), en ce que de préférence l'unité de commande centrale (2) transmet, en même temps que la transmission de la tâche de commande, une hiérarchie (H) des unités de commande locales (41-1, 42-1) dans le groupement de régulation (4G) et/ou dans le groupement régional (4R), l'unité de commande locale (42-1) suivante dans la hiérarchie (H) étant ménagée, en cas de défaillance de l'unité de commande (41-1), chargée de la commande, ou de l'installation locale correspondante d'accumulation d'énergie, pour la commande du groupement de régulation (4G) et/ou du groupement régional (4R).

12. Système d'accumulation d'énergie (1) selon l'une quelconque des revendications précédentes,
**caractérisé en ce**
**que** l'unité de commande locale (41-1, 42-1, 43-1) est conçue pour vérifier périodiquement par l'intermédiaire du réseau de communication (3) la liaison existant vers l'unité de commande centrale (2), et en ce que l'unité de commande locale (41-1, 42-1, 43-1) est conçue, en cas d'une interruption de la liaison vers l'unité de commande centrale (2), pour rétablir cette liaison par l'intermédiaire d'un sous-réseau de communication (31, 32, 33) alternatif présent dans le réseau de communication (3).

13. Procédé de fonctionnement d'un système d'accumulation d'énergie (1) selon la revendication 1, comprenant une ou plusieurs installations locales d'accumulation d'énergie (4, 41, 42, 43) ayant une capacité d'accumulation locale respective (LSK) et une puissance locale (LL), lesquelles sont respectivement raccordées au moyen d'une unité de régulation (41-3, 42-3, 43-3) pour l'absorption (En) d'énergie provenant d'un ou de plusieurs réseaux électriques locaux (6, 61, 62, 63, 64) et pour la restitution (Ep) d'énergie à un ou plusieurs réseaux électriques locaux (6, 61, 62, 63, 64) et d'un / à un réseau électrique non local (5), l'unité de régulation (41-3, 42-3, 43-3) comprenant un coffret de régulation (10) doté d'un organe de régulation (10-1) et de coupe-circuits (10-2) séparés pour chacun des réseaux électriques raccordés (5, 6), comprenant les étapes
- commande (SL) de l'installation locale respective d'accumulation d'énergie (4, 41, 42, 43) pour des tâches de régulation et des tâches de système locales (LRS) destinées à améliorer une qualité de réseau locale dans un ou dans plusieurs réseaux électriques locaux (6, 61, 62, 63, 64) raccordés à l'installation locale d'accumulation d'énergie (4, 41, 42, 43), en tant que réseaux électriques spatialement limités comprenant des réseaux électriques internes ou un réseau électrique disposé dans une maison ou dans un complexe de bâtiments, ou des réseaux électriques d'un parc d'énergie éolienne ou d'une centrale solaire, au moyen d'une unité de commande locale (41-1, 42-1, 43-1) dans le cadre de la capacité (LSKI) et de la puissance (LLI) de l'installation d'accumulation d'énergie (4, 41, 42, 43), ménagées pour le ou les réseaux électriques locaux (6, 61, 62, 63, 64),
- transmission (U1), par l'unité de commande locale (41-1, 42-1, 43-1), des capacités (LSKg) et de la puissance (LLg) de l'installation locale d'accumulation d'énergie (4, 41, 42, 43) non nécessaires pour les tâches de régulation et les tâches de système locales, par l'intermédiaire d'un réseau de communication (3) raccordé, à une unité de commande centrale (2) également raccordée au réseau de communication (3), et
- commande (SNL) de l'installation respective locale d'accumulation d'énergie (41, 42, 43) pour l'absorption (En) et la restitution (Ep) d'énergie pour des tâches de régulation et des tâches de système non locales (NLRS), comme par exemple une mise à disposition de puissance de régulation primaire et secondaire ou un support d'un démarrage autonome, une accumulation de pointes de puissance, une compensation de puissance réactive ou une augmentation de puissance de transmission dans le réseau électrique non local (5) directement raccordé à l'installation locale d'accumulation d'énergie (4, 41, 42, 43), en tant qu'un réseau électrique public, au moyen de l'unité de commande centrale (2) par l'intermédiaire du réseau de communication (3) dans le cadre des fractions libres de toutes les capacités d'accumulation locales (LSKg) et de la puissance (LLg) de l'installation d'accumulation d'énergie (4, 41, 42, 43), non nécessitées pour les tâches de régulation et les tâches de système locales (LRS), transmises à l'unité de commande centrale (2), le raccordement des réseaux électriques étant conçu de manière à ce que les réseaux électriques locaux et non locaux puissent être alimentés en énergie simultanément et indépendamment les uns des autres par l'installation d'accumulation d'énergie ou de manière à ce que de l'énergie puisse être prélevée des réseaux électriques,
l'unité de commande locale (41-1) étant raccordée à l'organe de régulation (10-1) par l'intermédiaire d'une liaison de données pour la transmission de données de configuration suivant une fonction de régulation (KD-R) destinée à la commande de flux d'énergie,
l'unité de régulation (41-3, 42-3, 43-3) étant conçue pour régler un flux d'énergie entre les réseaux électriques (5, 6, 61, 62, 63, 64) raccordés et l'installation d'accumulation d'énergie (4, 41, 42, 43), l'organe de régulation (10-1), en raison des données de configuration de la fonction de régulation (KD-R), commandant la répartition du flux d'énergie (EF) ,venant du point d'application (45), sur les réseaux électriques raccordés (5, 6) en tant que flux d'énergie (EFI) pour le réseau électrique local (6) et en tant que flux d'énergie (EFg) pour le réseau électrique non local (5).

14. Procédé selon la revendication 13, comprenant les étapes supplémentaires :
- configuration et/ou mise à jour (KA) dans une mémoire de tâches (41-4, 42-4, 43-4) de l'installation locale d'accumulation d'énergie (4, 41, 42, 43) au moins des tâches de régulation ou des tâches de système locales (NLRS) pour le réseau électrique non local (5), laquelle mémoire de tâches comprend en plus les tâches de régulation et les tâches de système locales (LRS),
- accès (Z) de l'unité de commande locale (41-1, 42-1, 43-1) à la mémoire de tâches (41-4, 42-4, 43-4) pour la commande (SNL, SL) de l'accumulateur d'énergie local (4, 41, 42, 43),
- commande prioritaire (SL) de l'installation d'accumulation d'énergie (4, 41, 42, 43) pour les tâches de régulation et les tâches de système locales (LRS) par l'unité de commande locale (41-1, 42-1, 43-1) suivant la mémoire de tâches (41-4, 42-4, 43-4) en fonctionnement normal (NB), et
- réalisation exclusive (SL-A) des tâches de régulation et des tâches de système locales (LRS) pour le ou les réseaux électriques locaux respectifs (6, 61, 62, 63, 64) en cas de défaillance du réseau de communication (3, 31, 32, 33) et/ou de l'unité de commande centrale (2).
